(19) Europäisches Patentamt
European Patent Office
Office européen des brevets

(11) **EP 4 450 161 A1**

(12) **EUROPÄISCHE PATENTANMELDUNG**

(43) Veröffentlichungstag:
**23.10.2024 Patentblatt 2024/43**

(21) Anmeldenummer: **24171010.2**

(22) Anmeldetag: **18.04.2024**

(51) Internationale Patentklassifikation (IPC):
**B01L 3/00** *(2006.01)*

(52) Gemeinsame Patentklassifikation (CPC):
**B01L 3/502738; F16K 99/0032;** B01L 2200/12;
B01L 2400/0677; B01L 2400/0688;
F16K 2099/0084

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(30) Priorität: **18.04.2023 DE 102023109715**

(71) Anmelder: **Technische Universität Dresden
Körperschaft des
öffentlichen Rechts
01069 Dresden (DE)**

(72) Erfinder:
• **SHAHADHA, Mohammed
01099 Dresden (DE)**
• **GRUNER, Denise
01309 Dresden (DE)**
• **RICHTER, Andreas
01219 Dresden (DE)**
• **BECK, Anthony
01219 Dresden (DE)**
• **OBST, Franziska
01237 Dresden (DE)**

(74) Vertreter: **Maikowski & Ninnemann
Patentanwälte Partnerschaft mbB
Postfach 15 09 20
10671 Berlin (DE)**

(54) **MIKROFLUIDISCHE VORRICHTUNG UND VERFAHREN ZUM AKTIVIEREN DIESER**

(57) Die Erfindung betrifft eine mikrofluidische Vorrichtung aufweisend
• mindestens eine Befüllungsstruktur aufweisend mindestens einen kanalförmigen Teil, mindestens ein Paar von Verbindungselementen und ein Phasenwechselmaterial, und
• mindestens einen ersten Kanalabschnitt und einen zweiten Kanalabschnitt
wobei jedes Verbindungselement des Paares von Verbindungselementen mindestens eine plötzliche Ausdehnung aufweist. Das mindestens eine Paar von Verbindungselementen der Befüllungsstruktur kann erfindungsgemäß einen geöffneten und einen geschlossenen Zustand einnehmen und die mindestens eine Befüllungsstruktur in der mikrofluidischen Vorrichtung ist derart angeordnet, dass diese den ersten Kanalabschnitt und den zweiten Kanalabschnitt über das mindestens eine Paar von Verbindungselementen miteinander fluidverbindet, wenn sich das mindestens eine Paar von Verbindungselementen im geöffneten Zustand befindet. Weiterhin bildet die Außenwand jeder plötzlichen Ausdehnung zur angrenzenden Außenwand eines Kanalabschnittes einen Öffnungswinkel $\alpha$, wobei $\alpha \leq 90°$ ist.

## FIG 4A

0 min

EP 4 450 161 A1

**Beschreibung**

Die Erfindung betrifft eine mikrofluidische Vorrichtung aufweisend

- mindestens eine Befüllungsstruktur aufweisend mindestens einen kanalförmigen Teil, mindestens ein Paar von Verbindungselementen und ein Phasenwechselmaterial, und
- mindestens einen ersten Kanalabschnitt und einen zweiten Kanalabschnitt wobei jedes Verbindungselement des Paares von Verbindungselementen mindestens eine plötzliche Ausdehnung aufweist. Das mindestens eine Paar von Verbindungselementen der Befüllungsstruktur kann erfindungsgemäß einen geöffneten und einen geschlossenen Zustand einnehmen und die mindestens eine Befüllungsstruktur in der mikrofluidischen Vorrichtung ist derart angeordnet, dass diese den ersten Kanalabschnitt und den zweiten Kanalabschnitt über das mindestens eine Paar von Verbindungselementen miteinander fluidverbindet, wenn sich das mindestens eine Paar von Verbindungselementen im geöffneten Zustand befindet. Weiterhin bildet die Außenwand jeder plötzlichen Ausdehnung zur angrenzenden Außenwand eines Kanalabschnittes einen Öffnungswinkel $\alpha$, wobei $\alpha \leq 90°$ ist.

Weiterhin betrifft die Erfindung ein Verfahren zum Aktivieren der erfindungsgemäßen mikrofluidischen Vorrichtung.

Mikrofluidische Vorrichtungen, wie mikrofluidische Ventile oder mikrofluidische Mischer unterstützen viele fluidische Operationen. Im einfachsten Fall ermöglichen mikrofluidische Ventile den Fluidstrom in eine bestimmte Richtung (im Normalfall geschlossen) oder sie blockieren ihn (im Normalfall offen). Aber sie können auch zum Umschalten oder dem Einstellen von Flüssigkeitsströmen zwischen (verschiedenen) Chemikalien in einer Y-Junction-Geometrie oder zum Mischen von Reagenzien verwendet werden. Für viele Anwendungen sind sie unerlässlich, z.B. Immunoassays, Drug Screening, Nukleinsäure-Reinigung, etc. Aus diesem Grund und zur Erweiterung der Anwendungsmöglichkeiten ist es notwendig externe Steuergeräte, die u.a. zum Betreiben der mikrofluidischen Ventile genutzt werden, so weit wie möglich zu vermeiden, und mikrofluidische Ventile sich selbst steuern zu lassen. Dies erlaubt dann eine deutlich breitere Anwendung auch komplexerer Systeme im Bereich Point-of-Care.

Die Integration mikrofluidischer Ventile auf einem Chip stellt in der Regel eine Herausforderung dar, da häufig bewegliche Baugruppen im Mikrometer-Maßstab von Nöten sind oder bestimmte, lokalisierte Oberflächenmodifikationen, sowie eine externe Ansteuerung. Dabei kann die Regelung der Ventile direkt erfolgen, z.B. bei Solenoid-Ventilen, Drehventilen oder pneumatischen Ventilen oder sie erfolgt indirekt durch Erhöhung oder Erniedrigung der Flussrate, Druck (z.B. Membran-basierendes Kontrollventil) oder Drehzahl, z.B. bei den sogenannten RPM-Ventilen (häufig anzutreffen in bei Lab-on-CD Systemen).

Im Stand der Technik sind mikrofluidische Systeme mit integrierten aktiven Elementen bekannt. Aktive Elemente, wie die Mikroventile dienen der Flusskontrolle und erlauben dadurch sehr komplexe und automatisierte mikrofluidische Systeme. Mikroventile, wie mechanische, pneumatische und Solenoid-Ventile bedürfen dabei einer externen Steuerung. Zudem sind die Aufbauten teilweise recht kompliziert ausgestaltet, und sind auf bestimmte, meist nicht kunststoffbasierte, Materialien festgelegt und müssen deshalb separat gefertigt werden. Eine mögliche Hybrid-Integration (z.B. Aufkleben der Elemente auf das mikrofluidische System) ist im Regelfall nicht wirtschaftlich.

Wandlerelemente, die auf Änderungen des Aggregatzustandes beruhen, lassen sich mit zum Teil geringfügigen Eingriffen in das Layout der Kanalstrukturträger integrieren und sind deshalb meist zum Fertigungsprozess der Kunststoffformteile des Kanalstrukturträgers kompatibel. Es sind beispielsweise Schmelzelemente (R. Pal et al., Anal. Chem. 76, 13 (2004), Kong et al., Microfluidics and Nanofluidics 18 (2015), Greiner et al., Lab on a Chip 12 {2012)), Gefrierelemente (US6536476) sowie thermische Blasengeneratoren als Mikropumpe (US6283718) bekannt.

Greiner et al. {2012) integrieren Phasenwechselmaterialien basierend auf Polyethylenglykol mittels Schablonendruck. Dazu wird eine strukturierte Kupfermaske mit einer definierten Schichtdicke auf ein Substrat, welches die Kanalstrukturen aufweist positioniert. Das Phasenwechselmaterial wird über die Phasenübergangstemperatur aufgeschmolzen und auf die Kupfermaske gegeben und mit einem Metallschieber verteilt. Nur im Bereich der Durchgangsöffnungen in der Maske wird das Phasenwechselmaterial durch die Maske in die mikrofluidischen Kanäle gedrückt und bildet dort die Ventile. Bei Kontakt mit dem Kanalmaterial kühlt das Phasenwechselmaterial ab und erstarrt. Um ein hermetisches Verschließen des Kanals zu gewährleisten, wird nach dem Verschließen der Kanalstruktur mit einer Abdeckplatte die Struktur kurz über die Phasenübergangstemperatur erhitzt, so dass das Phasenwechselmaterial schmilzt und den Kanal luftdicht verschließt. Phasenwechselmaterialien, die in Form einer Membran vorliegen, z.B. Polyvinylalkohol, werden zwischen die einzelnen mikrofluidischen Schichten geklebt.

Die EP2969215 offenbart ein mikrofluidisches System, in welches ein Zwischenlayer, der aus einer einzelnen monolithischen Membran besteht und als Separationslayer dient, integriert ist. Dabei kann dieser Separationslayer eine Vielzahl von Komponenten aufweisen, die zum Teil löslich gegenüber bestimmten Reagenzien sein können (z.B. Polyethylenglykol, PLA, PLGA, etc.).

Die WO2014/198939A1 offenbart ein mikrofluidisches System, in welches ein erstes Ventil/Ablassventil in Form eines löslichen Films integriert ist. Dabei ist der lösliche Film in oder neben der Durchgangsöffnung zwischen zwei zueinander ausgerichteten Kanalstrukturen angeordnet und weist normalerweise eine geschlossene Konfiguration auf, die den Durchgang der Flüssigkeit durch die Durchgangsöffnung verhindert.

Die EP2836302 offenbart ein Verfahren und eine Vorrichtung zur gezielten Prozessführung in einem mikrofluidischen System mit integrierten aktiven Elementen. Dabei werden die Phasenwechselmaterialien mittels Schablonendruck oder Pick-and-Place-Technologie in die mikrofluidischen Kanalstrukturen integriert.

Die US7722809 offenbart ein Gerät zum Nachweis von Bioagenzien, in welches Ventile, die aus einem polymeren Material bestehen integriert sind, um zwei Kammern voneinander zu trennen. Diese polymeren Materialen lösen sich in Kontakt mit den Bioagenzien auf. Zur Erzeugung der Ventile werden die polymerisierbaren Materialien in das mikrofluidische System injiziert und über eine optische Maske, die auf den Kanalstrukturen positioniert wird, an den entsprechenden Öffnungen in der Maske mit UV-Licht bestrahlt und somit polymerisiert. Das nicht polymerisierte Material wird anschließend aus den Kanalstrukturen mit Ethanol herausgespült.

Die löslichen Polymere können auch direkt in der mikrofluidischen Struktur aufgeschmolzen und wieder abgekühlt werden, um Zugänge zu Kanälen zu blockieren und Medien zu separieren (Kong et al. 2015).

R. Pal et al., beladen die mikrofluidische Struktur mit dem geschmolzenen Phasenwechselmaterial durch Kapillarkräfte. Dabei wird das Material über einen Schaftkanal durch Kapillarkräfte in die mikrofluidische Struktur eingesaugt. Da Schaftkanal und Hauptkanal (führt das Prozessmedium) miteinander verbunden sind, wird das geschmolzene Material pneumatisch getrieben an die entsprechende Stelle in der mikrofluidischen Struktur befördert, wo es den Hauptkanal abdichtet. Durch Änderung der Temperatur unter die Phasenübergangstemperatur erfolgt das Verschließen des Kanals. Zum Öffnen des Ventils/Hauptkanals wird das geschmolzene Material durch Anlegen von Vakuum an der Einlassöffnung des Schaftkanals von der Kreuzung Schaftkanal-Hauptkanal wegbewegt.

US6536476 beschreibt ein Phasenwechselmaterial, welches flüssig in das mikrofluidische System eingeleitet wird. Passiert die Flüssigkeit das Hitze-isolierte Material und erreicht einen Temperaturkontrollierten Bereich (durch integrierte Peltier-Elemente) kann es durch Temperaturänderung unter den Phasenübergangsbereich zum Erstarren der Flüssigkeit und somit zum Verschließen des Kanals kommen.

Der Nachteil dieser beschriebenen Methoden zur Integration der Phasenwechselmaterialien liegt zum einen in der vergleichsweise aufwendigen und meist manuellen Prozessführung, die zu Fehlern und einer reduzierten Reproduzierbarkeit der Aktoreigenschaften führen kann. Zudem können diese aufwändigen Integrationsmethoden zu einem niedrigen Durchsatz in der Produktion führen. Weiterhin kann die Integration in Form von Membranen oder Filmen zu Herausforderungen beim Fügen der Mehrlagenaufbauten führen, wodurch es zu Leckagen kommen kann oder starken Einschränkungen in Bezug auf den adressierbaren Druckbereich.

Pick-and-Place ist nur für eine kleine Anzahl an Bauelementen geeignet da bei händischer Umsetzung ein unwirtschaftlich hoher Aufwand entsteht. Eine maschinelle Fertigung ist zwar ebenfalls möglich, hierfür werden jedoch entsprechende Geräte benötigt, die wiederum mit entsprechenden Anschaffungskosten verbunden sind. Insbesondere das Alignment kann bei dieser Technologie problematisch werden. Eine funktionierende Abdichtung stellt ebenso eine Herausforderung dar, wie die Reproduzierbarkeit.

Wird als Technologie der Schablonendruck verwendet, können Substrate großflächig vorbereitet werden. Das Alignment spielt hierbei ebenso eine wichtige Rolle, wie die anschließende Abdichtung. Insbesondere muss bei dieser Technologie die Homogenität über die gesamte Fläche gewährleistet sein sowie die Haftung der Bauelemente am Substrat ausreichend sein, um eine gute Integration und Übertragung aller Bauelemente zu gewährleisten. Besonders nachteilig an dieser Technologie ist, dass die Fertigung einer metallischen Maske notwendig ist.

Werden Ventile in Form einer monolithischen Membran oder eines Films hergestellt, stellt insbesondere das Fügen der einzelnen Layer eine große Herausforderung dar. Eine Materialkompatibilität muss mit der gesamten Fertigungsmethode gewährleistet werden. Das Fügen durch z.B. Kleben, Pressen, thermisches oder flüssiges Fügen kann zu Deformationen im Bereich der "Durchgangsöffnungen" führen. Die Technologie zeichnet sich daher nachteilig durch eine geringe Reproduzierbarkeit aus.

Wird eine photolithographische Strukturierung (z.B. für biologisch abbaubare Hydrogele) verwendet ist eine gleichmäßige Prozessführung wichtig, um gleichmäßige Membranen bzw. Bauelemente zu erzeugen. Die Reproduzierbarkeit des Verfahrens wird damit erschwert. Zudem müssen photolithographisch nicht umgesetzte Monomere aus den mikrofluidischen Strukturen wieder entfernt werden.

Beim direkten Aufschmelzen eines Materials in den mikrofluidischen Strukturen entstehen ähnliche Nachteile wie beim Pick-and-Place Verfahren. Zudem ist eine präzise Dosierung und Barrierefunktion des Materials notwendig, um reproduzierbare Ventileigenschaften zu erzielen.

Der 3D Druck weist ähnliche Vor- und Nachteile wie der Schablonendruck auf. Vorteilhafterweise können jedoch gegenüber dem Schablonendruck deutlich mehr druckbare Materialien in einem Prozess verwendet werden. Es werden jedoch entsprechend leistungsfähige Druckverfahren und Geräte (Fused Depostion Modeling, Stereolithographie, Extruder) benötigt. Zudem ist eine Integration in offene Strukturen, und ggf. Oberflächenmodifikationen notwendig, um ein Verlaufen des gedruckten Materials zu unterbinden. Im Anschluss müssen die mikrofluidischen Strukturen nach dem Verschließen noch abgedichtet werden.

Neben der Steuerung von Fluiden ist für viele Anwendungen auch die Dosierung und das Mischen von mindestens zwei Fluiden wichtig. Mikrofluidisch können verschiedene Funktionsprinzipien zur definierten Flüssigkeitsdosierung verwendet werden. Die sequentielle Injektion von Flüssigkeiten kann so z.B. durch eine Kreuzinjektionsverbindung [1] mit positiver Verdrängung, die durch eine Kombination aus einer peristaltischen Pumpe mit drei Ventilen, einer Kreuzinjektions-Kreuzung mit vier Anschlüssen und integrierten Ventilen gebildet werden, realisiert werden. Die EWOD-Technologie [2] bietet ebenfalls Möglichkeiten der präzisen Dosierung und Mischung von Flüssigkeitstropfen mittels elektrokinetischer Kräfte durch Veränderung der Oberflächenspannung. Bei der Pulsweitenmodulation [3] wird durch Ansteuerung von vier Ventilen der Fluss von zwei Flüssigkeiten so manipuliert, dass ein präzises Dosieren der Flüssigkeiten und deren Mischen realisiert wird. Durch Integration von definierten Kammern und Integration von Ventilen (z.B. Laplace-Ventilen [4], pneumatischen Ventilen [5], aktiven Bauelementen [6]) kann ebenfalls ein präzises Dosieren von Flüssigkeiten und anschließend das Mischen mittels Diffusion in einem laminaren Strom erfolgen. Im Bereich der Lab-on-a-Disc [7] erfolgt das Dosieren von Flüssigkeiten nach dem Überlaufprinzip, wobei der Auslass in der Regel ein passives Ventil z.B. eine hydrophobe oder hydrophile Barriere oder einen Siphon umfasst.

Das Mischen der Flüssigkeiten kann anschließend durch passive Elemente erfolgen oder durch aktive Kräfte [8,9]. Beim passiven Mischen wird die Struktur oder Konfiguration der fluidischen Kanäle variiert. Aktive Mischer werden durch den Nutzer kontrolliert, da das Mischen der Fluide durch Druckgradienten, elektrische Felder oder integrierte Mischerelemente wie Rührstäbe erfolgt. Durch die Integration von aktiven Mischern, welche meist aus beweglichen Teilen bestehen, und deren externe Steuerung wird die Herstellung dieser Systeme deutlich aufwendiger.

Da in mikrofluidischen Systemen in der Regel im laminaren Flussbereich gearbeitet wird, soll im Bereich der passiven Mischerstrukturen durch geschickte Gestaltung der Kanalwände, -geometrie und -oberflächeneigenschaften die Mischung der Flüssigkeiten verbessert werden. Dies kann zum einen durch eine gezielte Stromaufteilung und -Kombination ermöglicht werden, wobei traditionelle T-förmige oder Y-förmige Mischerstrukturen verwendet werden.

Für viele Anwendungen sind Prozessabfolgen bestehend aus Dosierung, Mischen, Reaktion und Auslesung erforderlich. Auch die Herstellung von mikrofluidischen Kanälen mit schrägen Vertiefungen, Rippen oder Rillen wird zum Mischen von Flüssigkeiten verwendet, um die Gesamtlänge des Kanals zu verringern. Ziel dieser Strukturen ist die Generierung von chaotischen Strömungsprofilen durch Änderung der Flußrichtungen und Fließgeschwindigkeiten. Auch durch Oberflächenmodifikationen können Sekundärströme erzeugt werden, die zu einem effizienteren Mischen von Flüssigkeiten im laminaren Strom führen.

Ausgehend vom Stand der Technik ist es die Aufgabe der Erfindung eine technologisch einfache und wirtschaftlich günstige mikrofluidische Vorrichtung zur Verfügung zu stellen, die die Nachteile aus dem Stand der Technik beheben und als mikrofluidisches Ventil oder mikrofluidischer Mischer eingesetzt werden kann. Die Aktivierungszeit der mikrofluidischen Vorrichtung sollten dabei möglichst gut reproduzierbar sein.

Hierfür stellt die Erfindung eine mikrofluidische Vorrichtung gemäß Anspruch 1 und ein Verfahren zum Schalten der mikrofluidischen Vorrichtung gemäß Anspruch 7 zur Verfügung.

**Detaillierte Beschreibung**

Die erfindungsgemäße mikrofluidische Vorrichtung weist

- mindestens eine Befüllungsstruktur aufweisend mindestens einen kanalförmigen Teil, mindestens ein Paar von Verbindungselementen und ein Phasenwechselmaterial, und
- mindestens einen ersten Kanalabschnitt und einen zweiten Kanalabschnitt auf.

Das mindestens eine Paar von Verbindungselementen der Befüllungsstruktur kann einen geöffneten und einen geschlossenen Zustand einnehmen. Erfindungsgemäß ist die mindestens eine Befüllungsstruktur in der mikrofluidischen Vorrichtung derart angeordnet, dass diese einen ersten Kanalabschnitt und einen zweiten Kanalabschnitt über das mindestens eine Paar von Verbindungselementen miteinander fluidverbindet, wenn sich dieses im geöffneten Zustand befindet.

Der mindestens eine kanalförmige Teil der Befüllungsstruktur und der erste und zweite Kanalabschnitt sowie jeder weitere Kanalabschnitt und kanalförmige Teil der Befüllungsstruktur der mikrofluidischen Vorrichtung weisen dabei in der Mikrofluidik übliche Dimensionen auf. Kanalförmig bezeichnet erfindungsgemäß einen Teil der Befüllungsstruktur der die Geometrie eines Kanals aufweist. Der Begriff Kanal bzw. Kanalabschnitt umfasst dabei sowohl rechteckige Kanäle als auch Kanäle mit einem kreisförmigen Querschnitt (Schläuche). Die Kanaldurchmesser liegen üblicherweise im Bereich von 50 μm bis 1 mm, bevorzugt im Bereich von 100 μm bis 500 μm, besonders bevorzugt im Bereich von 150 μm bis 300 μm. Kanäle mit eckigen Querschnitten weisen entsprechend Dimensionen auf, die mit den beschriebenen Kanaldurchmessern vergleichbar sind.

In einer Ausführungsform sind der erste und/oder der zweite Kanalabschnitt und/oder jeder weitere Kanalabschnitt der mikrofluidischen Vorrichtung Teil eines Kanalsystems. Ein Kanalsystem kann üblicherweise Verzweigungen von mehreren Kanälen aufweisen.

Während die Befüllungsstruktur mit einem Phasenwechselmaterial befüllt wird und eine Ventilfunktion umsetzt, dienen der erste und zweite Kanalabschnitt erfindungsgemäß dem Transport von Prozessmedien.

Verbindungselemente

Erfindungsgemäß weist die mindestens eine Befüllungsstruktur mindestens ein Paar von Verbindungselementen auf. Das Paar von Verbindungselementen besteht aus einem ersten und einem zweiten Verbindungselement, die eine Fluidverbindung zwischen einem ersten Kanalabschnitt und einem zweiten Kanalabschnitt erzeugen, wenn das Paar von Verbindungselementen sich im geöffneten Zustand befindet. Dabei wird durch das erste Verbindungselement eine fluidische Verbindung zwischen einem ersten Kanalabschnitt und der Befüllungsstruktur erzeugt und durch das zweite Verbindungselement eine fluidische Verbindung zwischen einem zweiten Kanalabschnitt und der Befüllungsstruktur. Die Verbindungselemente einer erfindungsgemäßen Befüllungsstruktur treten daher immer als Paar von Verbindungelementen auf.

Jedes Verbindungselement des Paars von Verbindungselementen stellt dabei mindestens eine plötzliche Ausdehnung der Befüllungsstruktur in Richtung eines Kanalabschnittes dar, wobei eine plötzliche Ausdehnung erfindungsgemäß eine kanalförmige Verbindung zu einem Kanalabschnitt sein kann.

Jede plötzliche Ausdehnung eines Verbindungselementes grenzt erfindungsgemäß an einen Kanalabschnitt an. Die Außenwand der plötzlichen Ausdehnung bildet dabei erfindungsgemäß zur Außenwand des angrenzenden Kanalabschnittes einen sogenannten Öffnungswinkel $\alpha$. Erfindungsgemäß ist der Öffnungswinkel $\alpha \leq 90°$. Nach unten ist die Größe des Öffnungswinkels nur durch die technischen Möglichkeiten des Herstellungsverfahrens beschränkt, mit dem die mikrofluidische Vorrichtung erzeugt wird. Übliche Herstellungsverfahren sind beispielsweise:

- Laserstrukturierung der einzelnen Layer und Fügen durch z.B. Heißpresse, Klebefilme;
- Soft-Lithographie (Herstellung eines Masters (z.B. SU8 oder DFR) und Abformen in z.B. PDMS oder PU);
- 3D Druck;
- Hot-Embossing;
- Lithographie mit Nass/Trockenätzverfahren;
- Mikrozerspanung (Bohren und Fräsen);
- Ultraschallbearbeitung;
- elektroerosive bzw. elektrochemische Bearbeitung;
- e-beam Bearbeitung; und
- focused Ion Beam Bearbeitung.

Durch die Verbindungselemente, die mindestens eine plötzliche Ausdehnung aufweisen, wird beim Befüllen der Befüllungsstruktur mit dem Phasenwechselmaterial verhindert, dass das Phasenwechselmaterial auch den ersten oder zweiten Kanalabschnitt befüllt. Hierfür wird die Funktionsweise von Kapillar-Absperrventilen ausgenutzt. Unter anderem durch den beschriebenen Öffnungswinkel wird hierbei sichergestellt, dass kein Phasenwechselmaterial in den angrenzenden Kanalabschnitt eindringen kann. Die mindestens eine plötzliche Ausdehnung und jede weitere eines Verbindungselementes kann einen runden oder auch einen eckigen Querschnitt aufweisen. Die plötzliche Ausdehnung eines Verbindungselementes weist dabei in der Mikrofluidik übliche Dimensionen auf, wobei die Abmaße so gewählt werden, dass eine Kapillar-Absperrwirkung entsteht.

Die Wirkweise von Kapillarabsperrventilen ist aus dem Stand der Technik bereits bekannt und hängt mit den Druckunterschieden zusammen, die auftreten, wenn die Flüssigkeit die Ausdehnung erreicht. Dabei wird der Druck (p) durch die Änderung der Grenzflächenenergie (U) und der Volumenänderung (V) (flüssiges Phasenwechselmaterial im System) bestimmt. In die Grenzflächenenergie gehen dabei die Kontaktfläche Phasenwechselmaterial - Kanalwand, Kontaktfläche Phasenwechselmaterial - Luft und Kanalwand - Luft ein und die entsprechenden Oberflächenenergien, die wiederum abhängig vom Kontaktwinkel sind [10], [11]. Ist der Druck definiert als p = dU/dV, dann muss der Druck positiv sein, um ein Kapillarabsperrventil zu realisieren. Der Fachmann ist hiermit vertraut und in der Lage eine geeignete Dimension des Verbindungselementes zu wählen. Beispielsweise kann das Verhältnis von Durchmesser des Verbindungelementes zum Durchmesser des Kanalsystems mit 1:2, 2:3 oder 3:8 gewählt werden.

In einer Ausführungsform der vorliegenden Erfindung ist weiterhin mindestens eine plötzliche Ausdehnung eines Verbindungselementes orthogonal zum kanalförmigen Abschnitt der Befüllungsstruktur ausgerichtet.

In einer Ausführungsform der vorliegenden Erfindung weist der kanalförmige Teil der Befüllungsstruktur einen kammerförmigen Teil auf. Der kammerförmige Teil kann beispielsweise die Form eines Quaders, Zylinders oder eines elliptischen Zylinders aufweisen. Die Höhe des kammerförmigen Teils entspricht dabei der Höhe des kanalförmigen Teils der Befüllungsstruktur. In dieser Ausführungsform grenzt die mindesten eine plötzliche Ausdehnung und jede weitere plötzliche Ausdehnung eines Verbindungselementes an die kammerförmige Ausdehnung des kanalförmigen Teils der Befüllungsstruktur an.

In einer Ausführungsform der vorliegenden Erfindung weist ein Verbindungselement mehrere plötzliche Ausdehnungen auf. Ein Verbindungselement weist beispielsweise 1 bis 30, bevorzugt 1 bis 20, besonders bevorzugt 1 bis 10 plötzliche Ausdehnungen auf. Bevorzugt weist jede plötzliche Ausdehnung die gleiche Geometrie auf.

Besonders bevorzugt ist, dass die mindestens zwei Verbindungselemente, die ein Paar von Verbindungselementen bilden und damit eine fluidische Verbindung zwischen einem ersten und einem zweiten Kanalabschnitt herstellen, die gleiche Anzahl plötzlicher Ausdehnungen aufweisen.

In einer Ausführungsform der vorliegenden Erfindung sind das erste und zweite Verbindungselement eines Paares von Verbindungelementen, gegenüberliegend zueinander angeordnet. Besonders bevorzugt sind darüber hinaus sämtliche plötzliche Ausdehnungen des ersten Verbindungselementes gegenüberliegend zu jeweils einer plötzlichen Ausdehnung des zweiten Verbindungselementes, also paarweise, angeordnet. In einer weiteren Ausführungsform sind das erste und zweite Verbindungselement eines Paares von Verbindungelementen parallel zueinander angeordnet.

Erfindungsgemäß weist die Befüllungsstruktur mindestens ein Paar von Verbindungselementen auf. In einer weiteren Ausführungsform weist die Befüllungsstruktur mehrerer Paare von Verbindungselementen auf. Die einzelnen Paare von Verbindungselementen verbinden dabei im geöffneten Zustand jeweils einen ersten mit einem zweiten Kanalabschnitt fluidisch. Erfindungsgemäß können Kanalabschnitte, die von verschiedenen Paaren von Verbindungselementen fluidische verbunden werden, untereinander beispielsweise in Form eines Kanalsystems verbunden sein oder auch keine weiteren fluidischen Verbindungen aufweisen.

Die Geometrie der einzelnen Paare von Verbindungelementen einer Befüllungsstruktur kann erfindungsgemäß für alle oder einen Teil der Paare von Verbindungselementen gleich sein oder aber für jedes Paare von Verbindungselementen unterschiedlich sein. Hierdurch kann vorteilhafterweise eine mikrofluidische Vorrichtung zur Verfügung gestellt werden, wobei jedes Paares von Verbindungselementen eine definierte Aktivierungszeit für das jeweilige Paar aufweist. Die Aktivierungszeiten einzelner Paare von Verbindungselementen einer Befüllungsstruktur können sich voneinander unterscheiden und können vorteilhafterweise, beispielsweise durch deren Geometrie, unabhängig voneinander eingestellt werden. Bevorzugt sind einzelne Paare von Verbindungselementen einer Befüllungsstruktur in der Befüllungsstruktur lokal derart voneinander beabstandet, dass sich die einzelnen Paare von Verbindungselementen bei deren Aktivierung nicht untereinander beeinflussen. Die Aktivierung und die Aktivierungszeit eines Paares von Verbindungselementen wird im Folgenden noch näher erläutert.

Durch Befüllungsstrukturen mit mehreren Paaren von Verbindungselementen können zum Beispiel Kaskaden in mikrofluidischen Systemen umgesetzt werden.

Grundlegend kann eine erfindungsgemäße Befüllungsstruktur beliebig viele Paare von Verbindungselementen aufweisen. In einer Ausführungsform weist eine Befüllungsstruktur 1 bis 30 Paare von Verbindungselementen, bevorzugte 1 bis 20 Paare von Verbindungselementen, besonderes bevorzugt 1 bis 10 Paare von Verbindungselementen auf.

## Einlass/Auslass

Die mindestens eine Befüllungsstruktur weist bevorzugt mindestens einen Einlass für das Phasenwechselmaterial auf. In einer weiteren Ausführungsform weist die mindestens eine Befüllungsstruktur weiterhin einen Auslass für das Phasenwechselmaterial auf. In einer bevorzugten Ausführungsform sind der mindestens eine Einlass und der mindestens eine Auslass in dem mindestens einen kanalförmigen Teil der Befüllungsstruktur oder einem weiteren kanalförmigen Teil der Befüllungsstruktur angeordnet.

In einer weiteren Ausführungsform der Erfindung ist die Befüllungsstruktur derart ausgestaltet, dass die Befüllungsstruktur seriell oder parallel über einen oder mehrere Einlässe befüllt wird.

Erfindungsgemäß ist die Befüllungsstruktur zumindest abschnittsweise mit einem Phasenwechselmaterial befüllbar.

## Aktivierung

Das mindestens eine Paar von Verbindungselementen der Befüllungsstruktur kann einen geöffneten und einen geschlossenen Zustand einnehmen.

Nach dem Befüllen der Befüllungsstruktur mit einem Phasenwechselmaterial, sind der kanalförmige Teil, ggf. der kammerförmige Teil und sämtliche Verbindungselemente mit Phasenwechselmaterial gefüllt. In diesem Zustand befinden sich nach dem Befüllen mit dem Phasenwechselmaterial sämtliche Paare von Verbindungselementen einer Befüllungsstruktur im geschlossenen Zustand. Ein Paar von Verbindungselementen befindet sich dann erfindungsgemäß so lange im geschlossenen Zustand, wie keine fluidische Verbindung zwischen einem ersten Kanalabschnitt, der an das erste Verbindungselement angrenzt und einem zweiten Kanalabschnitt, der an das zweite Verbindungselement angrenzt, besteht. Das heißt, ein Prozessmedium aus dem ersten Kanalabschnitt kann nicht in den zweiten Kanalabschnitt gelangen und umgekehrt. Das erste und zweite Verbindungselement bildet dabei ein erfindungsgemäßes Paar von Verbindungselementen.

Im geöffneten Zustand eines Paares von Verbindungselementen ist die Befüllungsstruktur hingegen mit dem Phasenwechselmaterial derart gefüllt, dass eine fluidische Verbindung zwischen dem ersten und dem zweiten Kanalabschnitt durch die Befüllungsstruktur besteht. Das heißt in den Verbindungselementen und im kanalförmigen oder kammerförmigen Teil der Befüllungsstruktur im Bereich der Verbindungselemente ist kein Phasenwechselmaterial vorhanden oder nur abschnittsweise, so dass ein Prozessmedium aus dem ersten Kanalabschnitt in den zweiten Kanalabschnitt gelangen kann und umgekehrt.

Unter der Aktivierung eines Paars von Verbindungselementen ist zu verstehen, dass das Paar von Verbindungselementen vom geschlossenen Zustand in den offenen Zustand übergeht. Die Aktivierung wird vor allem durch die Aktivierungszeit charakterisiert. Die Aktivierungszeit beschreibt, wie lange ein Paar von Verbindungelementen benötigt, um vom geschlossenen in den geöffneten Zustand überzugehen. Die Aktivierungszeit beginnt, wenn ein äußerer Einfluss auftritt, der eine Auflösung der Barriere des Phasenwechselmaterials initiiert und endet, wenn eine fluidische Verbindung zwischen dem ersten und zweiten Kanalabschnitt besteht.

Phasenwechselmaterial

Phasenwechselmaterialien sind im Sinne der Erfindung Materialien, die einen Phasenübergang von fest zu flüssig und umgekehrt aufweisen. Bevorzugt erfolgt der Phasenübergang in Abhängigkeit von der Temperatur oder dem Prozessmedium in der mikrofluidischen Vorrichtung. Weiterhin kann der Phasenübergang auch durch die Einwirkung von elektromagnetischer Strahlung verursacht werden. Durch das Aufschmelzen der Phasenwechselmaterialien können diese in die Befüllungsstruktur einfach eingebracht werden und erstarren beim Abkühlen. Durch die Zugabe von wässrigen Prozessmedien lösen sich die Phasenwechselmaterialien auf und können einen fluidischen Kanalabschnitt freigeben.

In einer Ausführungsform ist das Phasenwechselmaterial ausgewählt ist aus der Gruppe aufweisend unvernetzte Polymere, Mischungen unvernetzter Polymere, vernetzte Polymere, Mischungen vernetzter Polymere, Salze, Mischungen von Salzen, organische Substanzen, Mischungen organischer Substanzen und Mischungen dieser.

Weist das Phasenwechselmaterial ein unvernetztes und/oder vernetztes Polymer auf, so ist das Polymer in einer Ausführungsform ausgewählt aus der Gruppe aufweisend Polyacrylamide, Polyvinylalkohole, Polyacrylate, Hydroxycellulose, Polyvinylpyrridine oder Polyglykole (z.B. Polyethylenglykol, Polypropylenglykol) und deren Derivate.

Ist das Phasenwechselmaterial eine organische Substanz, so ist das Phasenwechselmaterial in einer Ausführungsform ein Saccharid. In einer weiteren Ausführungsform weist das Phasenwechselmaterial ein Saccharid auf.

In einer Ausführungsform der Erfindung weist das Phasenwechselmaterial eine Mischung der oben genannten Substanzen auf, beispielsweise eine Mischung eines Saccharids mit einem unvernetzten Polymer. Geeignete Mischungen sind beispielsweise Mannitol, Glucose, Cellulose oder 2-Hydroxycellulose gemischt mit Polyethylenglykol (PEG). Cellulose kann beispielsweise als Cellulosefasern, beispielsweise mit einer Länge von 20 bis 100 $\mu$m sein. Cellulosefasern mit anderen Längen sind auch geeignet. Erfindungsgemäß ist auch die Mischung von langkettigen unvernetzten Polymeren mit kurzkettigen unvernetzten Polymeren möglich. Durch die Verwendung einer Mischung können Aufbrüche im Phasenwechselmaterial reduziert oder gar vermieden werden, da das Schrumpfungsverhalten des Polymeranteils der Mischung reduziert wird. Dies schlägt sich wiederum vorteilhaft in stabileren Aktivierungszeiten der Verbindungselemente nieder.

Mischungen von kurzkettigen PEG, Sacchariden und/oder Cellulose : langkettigem PEG können in einer Ausführungsform im Bereich von 0:10 bis 4:10 w/w, bevorzugt 0,1:10 bis 3:10 w/w, besonders bevorzugt 0,5:10 bis 2:10 w/w liegen.

In einer Ausführungsform ist das Phasenwechselmaterial ausgewählt aus der Gruppe aufweisend:

- eine Mischung aus PEG mit einem Molekulargewicht von 2000kDa und Mannitol im Verhältnis 10:2 w/w;
- eine Mischung aus PEG mit einem Molekulargewicht von 2000kDa und Glucose im Verhältnis 10:2 w/w;
- eine Mischung aus PEG mit einem Molekulargewicht von 2000kDa und Cellulose im Verhältnis 10:0,5 w/w;
- eine Mischung aus PEG mit einem Molekulargewicht von 2000kDa und 2-Hydroxycellulose im Verhältnis 10:2 w/w;
- eine Mischung von PEG mit einem Molekulargewicht von 1000 kDa mit PEG mit einem Molekulargewicht von 1500 kDa im Verhältnis 2:10 w/w;
- eine Mischung von PEG mit einem Molekulargewicht von 1000 kDa mit PEG mit einem Molekulargewicht von 1500 kDa im Verhältnis 1:10 w/w;
- eine Mischung von PEG mit einem Molekulargewicht von 1000 kDa mit PEG mit einem Molekulargewicht von 1500 kDa im Verhältnis 4:10 w/w;
- eine Mischung von PEG mit einem Molekulargewicht von 1000 kDa : Mannitol : PEG mit einem Molekulargewicht von 1500 kDa im Verhältnis 2:2:10 w/w;

- eine Mischung von PEG mit einem Molekulargewicht von 1000 kDa : Cellulose : PEG mit einem Molekulargewicht von 1500 kDa im Verhältnis 2:0,5:10 w/w.

Prinzipiell können sämtliche Materialien eingesetzt werden, die im getrockneten Zustand einen Feststoff, ein Sol-Gel oder dergleichen bilden und bei Kontakt mit einer Flüssigkeit in Lösung gehen.

Insbesondere zeichnet sich das Phasenwechselmaterial dadurch aus, dass

- es löslich ist; und/oder
- enzymatisch abbaubar ist; und/oder
- durch die Einwirkung von elektromagnetischer Strahlung abbaubar ist; und/oder
- sich durch den Einfluss von Wärme verflüssigt.

Durch diese Eigenschaft wird es ermöglicht, das feste Phasenwechselmaterial zumindest abschnittsweise aus der Befüllungsstruktur zu entfernen und so ein Paar von Verbindungselementen zu aktivieren.

In einer Ausführungsform der Erfindung sind Phasenwechselmaterialien als flüssigkeitslösliche Barrieren ausgeführt, wodurch ein Paar von Verbindungelementen durch Gegenwart einer geeigneten Flüssigkeit aktivierbar ist. Diese geeignete Flüssigkeit ist ein Prozessmedium im ersten und/oder zweiten Kanalabschnitt. Im Falle der Ausbildung des Phasenwechselmaterials als flüssigkeitslösliche Barriere wird durch die Benetzung der Barriere mit Flüssigkeit an der Grenzfläche der Befüllungsstruktur (also im Bereich mindestens eines Verbindungselementes der Befüllungsstruktur) zum ersten Kanalabschnitt oder einem anderen Kanalabschnitt mit einem geeigneten Prozessmedium eine Auflösung der Barriere erzielt. Dadurch kommt es bei fortschreitender Auflösung der Barriere zu einem Ansteigen der Durchströmung der Befüllungsstruktur und infolgedessen zur Ausbildung einer Strömung der Flüssigkeit vom ersten Kanalabschnitt durch die die Verbindungelemente und einen Abschnitt des kanal- oder kammerförmigen Teils der Befüllungsstruktur zum zweiten Kanalabschnitt. Löslichkeit umfasst erfindungsgemäß sowohl Wasserlöslichkeit als auch Lösungsmittellöslichkeit.

In einer weiteren Ausführungsform der Erfindung wird das Phasenwechselmaterial enzymatisch abgebaut und damit mindestens ein Paar von Verbindungselementen aktiviert. Hierfür weist ein Prozessmedium, welches mindestens durch einen ersten Kanalabschnitt fließt, ein Enzym auf, welches in der Lage ist, das Phasenwechselmaterial abzubauen.

In einer weiteren Ausführungsform der Erfindung wird das Phasenwechselmaterial durch die Einwirkung von elektromagnetischer Strahlung, bevorzugt mit Wellenlängen im sichtbaren Bereich, abgebaut und damit mindestens ein Paar von Verbindungselementen aktiviert. In dieser Ausführungsform erfolgt eine Aktivierung durch die Einwirkung entsprechender elektromagnetischer Strahlung von außen.

In einer weiteren Ausführungsform wird das Phasenwechselmaterial durch die Einwirkung von Wärme verflüssigt. In dieser Ausführungsform erfolgt eine Aktivierung mindestens eines Paares von Verbindungselementen durch die Einwirkung von Wärme von außen.

Aufbau/Strukturträger

Die Oberfläche der Befüllungsstruktur kann behandelt sein, um deren hydrophile Eigenschaften an das verwendete Phasenwechselmaterial anzupassen und so eine optimale Benetzung der Oberflächen mit dem Phasenwechselmaterial zu gewährleisten. In einer Ausführungsform ist die Befüllungsstruktur mit einer hydrophilen Folie ausgekleidet. In einer weiteren Ausführungsform können auch die Oberflächen des ersten und zweiten Kanalabschnittes und jedes weiteren Kanalabschnittes behandelt sein, um deren hydrophilen Eigenschaften an die verwendeten Prozessmedien, die durch diese Kanalabschnitte fließen, anzupassen.

In einer Ausführungsform der Erfindung sind die Befüllungsstruktur, der erste Kanalabschnitt, der zweite Kanalabschnitt und jeder weitere Kanalabschnitt in mindestens einem Strukturträger angeordnet.

In einer Ausführungsform können die Befüllungsstruktur, der erste Kanalabschnitt, der zweite Kanalabschnitt und jeder weitere Kanalabschnitt in einem Strukturträger angeordnet sein. Der Strukturträger weist bevorzugt ein Material ausgewählt aus der Gruppe aufweisend Polyethylen (PE), Polyethylenterephthalat (PET), Polymethylmethacrylat (PMMA), Cycloolefin-Copolymer (COC) und Polycarbonat (PC) auf. Besonders bevorzugt ist der Strukturträger als selbstklebende Folie aus einem dieser Materialien gefertigt. Das mikrofluidische System beinhaltet in dieser Ausführungsform zudem mindestens eine Abdeckung, welche den Strukturträger zumindest teilweise abdeckt. In dieser Ausgestaltung wird ein sogenannter 2D-Aufbau gewährleitet. In einem 2D-Aufbau ist der Öffnungswinkel aller plötzlichen Ausdehnungen von Verbindungselementen in einer bevorzugten Ausführungsform $\alpha < 90°$.

In einer weiteren Ausführungsform der Erfindung kann die Befüllungsstruktur in einem ersten Strukturträger angeordnet sein und erstreckt sich auf einen vierten und fünften Strukturträger. Die Strukturträger sind dabei übereinander angeordnet. Ein erster Kanalabschnitt befindet sich in einem zweiten Strukturträger und ein zweiter Kanalabschnitt in einem dritten Strukturträger. Über den vierten und fünften Strukturträger, der zumindest eine Perforation im Überlappungsbereich von Befüllungsstruktur und dem ersten Kanalabschnitt und dem zweiten Kanalabschnitt aufweist, erfolgt die Verbindung zwischen dem ersten Kanalabschnitt, der Befüllungsstruktur und dem zweiten Kanalabschnitt. Diese Ausgestaltung wird als sogenannter 3D-Aufbau bezeichnet. In einem 3D-Aufbau ist der Öffnungswinkel aller plötzlichen Ausdehnungen von Verbindungselementen in einer bevorzugten Ausführungsform $\alpha$ = 90°.

In einer weiteren Ausführungsform ist der Einlass der Befüllungsstruktur in einem weiteren Strukturträger angeordnet.

In einer Ausführungsform ist die mikrofluidische Vorrichtung in einem Mikrofluidik-Chip integriert und kann damit Teil eines mikrofluidischen Systems sein.

In einer Ausführungsform der vorliegenden Erfindung weist ein Strukturträger oder ein Chip in dem die erfindungsgemäße Vorrichtung integriert ist ein Reservoir für das Phasenwechselmedium auf.

Die erfindungsgemäße Vorrichtung kann beispielsweise in einem mikrofluidischen System integriert werden.

Verfahren zum Aktivieren eines Paares von Verbindungselementen

Weiterhin stellt die Erfindung ein Verfahren zum Aktivieren eines Paares von Verbindungselementen zur Verfügung, dadurch gekennzeichnet, dass

a) die mindestens eine Befüllungsstruktur und jede weitere mit einem Phasenwechselmaterial im flüssigen Zustand gefüllt wird;
b) das Phasenwechselmaterial in den festen Zustand überführt wird;
c) ein erstes Prozessmedium durch den ersten Kanalabschnitt geleitet wird;
d) optional ein zweites Prozessmedium durch den zweiten Kanalabschnitt geleitet wird;
e) das erste Prozessmedium und optional das zweite Prozessmedium Kontakt mit dem festen Phasenwechselmaterial in der Befüllungsstruktur haben und das feste Phasenwechselmaterial in der Befüllungsstruktur durch den Kontakt mit dem ersten Prozessmedium und/oder durch den Kontakt mit dem zweiten Prozessmedium gelöst wird und/oder durch das Einwirken eines Enzyms in dem ersten und/oder zweiten Prozessmedium abgebaut wird und/oder ein externer Einfluss zugeschaltet wird, durch den das Phasenwechselmaterial abgebaut wird oder in die flüssige Phase übergeht;
f) das erste Prozessmedium aus dem ersten Kanalabschnitt über die Befüllungsstruktur in den zweiten Kanalabschnitt eindringt und optional das zweite Prozessmedium aus dem zweiten Kanalabschnitt in den ersten Kanalabschnitt eindringt.

Sämtliche Merkmale, die für die erfindungsgemäße Vorrichtung beschrieben wurden, treffen in gleicher Weise auf das erfindungsgemäße Verfahren zu und umgekehrt.

Die mindestens eine Befüllungsstruktur und jede weitere wird mit dem Phasenwechselmaterial befüllt. Dies kann über einen oder auch mehrere Einlässe erfolgen. Bevorzugt erfolgt die Befüllung über die gesamte Befüllungsstruktur. Weist die mikrofluidische Vorrichtung mehrere Befüllungsstrukturen auf, so kann jede Befüllungsstruktur mit einem anderen Phasenwechselmaterial befüllt werden. Dies eröffnet zusätzliche Möglichkeiten die Aktivierungszeit von Paaren von Verbindungselementen einzustellen.

Durch die Verbindungselemente, die mindestens eine plötzliche Ausdehnung aufweisen, wird beim Befüllen der Befüllungsstruktur mit dem Phasenwechselmaterial verhindert, dass das Phasenwechselmaterial auch den ersten oder zweiten Kanalabschnitt befüllt. Hierfür wird die Funktionsweise von Kapillar-Absperrventilen ausgenutzt.

Wird die mikrofluidische Vorrichtung in Strukturträgern bereitgestellt, kann die Integration der Phasenwechselmaterialien vor dem Verschließen der Strukturträger durch Befüllen der Befüllungsstruktur oder durch Drucken vorgenommen werden. Die Integration der Phasenwechselmaterialien kann aber auch nach dem Verschließen der Strukturträger unter Verwendung von Phasenwechselmaterialien, die in einem flüssigen Zustand vorliegen und nach der Befüllung erstarren, vorgenommen werden. In diesem Fall kann das Phasenwechselmaterial durch Kapillarkräfte in die Befüllungsstruktur eingebracht werden.

In einer Ausgestaltungsform der Erfindung erfolgt die Befüllung der Befüllungsstruktur mit einer Paste.

Nach Verschließen der Strukturträger mit einer Abdeckplatte erfolgt in einer Ausführungsform ein Abdichten der Befüllungsstruktur durch kurzes Erhitzen über den Phasenübergang des Phasenwechselmaterials.

In einer bevorzugten Ausführungsform wird die erfindungsgemäße Vorrichtung und damit die mindestens eine Befüllungsstruktur und jede weitere und der erste und zweite Kanalabschnitt und jeder weitere vor dem Befüllen mit dem Phasenübergangsmaterial derart erwärmt, dass das Phasenübergangsmaterial in flüssiger Form in die Befüllungsstruktur eingebracht werden kann. Hierfür wird das Phasenwechselmaterial ebenfalls erwärmt, bis dieses einen flüssigen Zustand einnimmt. Nach dem Einfüllen des Phasenwechselmaterials wird dieses, zum Beispiel durch Abkühlen in den festen Zustand überführt.

Anschließend wird ein erstes Prozessmedium durch den ersten Kanalabschnitt geleitet. Optional wird ein zweites Prozessmedium durch den zweiten Kanalabschnitt geleitet. Das erste Prozessmedium und optional das zweite Prozessmedium haben Kontakt mit dem festen Phasenwechselmaterial in der Befüllungsstruktur im Bereich der Verbindungselemente und das feste Phasenwechselmaterial in der Befüllungsstruktur löst sich durch den Kontakt mit dem ersten Prozessmedium und/oder durch den Kontakt mit dem zweiten Prozessmedium auf und/oder wird durch das Einwirken eines Enzyms in dem ersten und/oder zweiten Prozessmedium abgebaut und/oder geht durch einen zugeschalteten externen Einfluss in die flüssige Phase über. Der externe Einfluss kann zum Beispiel elektromagnetische Strahlung oder Wärme sein.

Nach dem Auflösen oder Abbauen des Phasenwechselmaterials im Kontaktbereich des ersten und zweiten Kanalabschnitts dringt das erste Prozessmedium aus dem ersten Kanalabschnitt über die Befüllungsstruktur im Bereich eines Paares der Verbindungselemente in den zweiten Kanalabschnitt ein und optional das zweite Prozessmedium aus dem zweiten Kanalabschnitt in den ersten Kanalabschnitt.

Das gelöste oder abgebaute Material des Phasenwechselmaterials wird mit dem oder den Prozessmedium/Prozessmedien abtransportiert. Das Phasenwechselmaterial wird daher vorteilhafterweise so ausgewählt, dass es auf eventuell folgende analytische Schritte keinen Einfluss hat.

Die Aktivierungszeit eines Paares von Verbindungselementen wird dabei von folgenden Faktoren bestimmt:

- von der Geometrie der jeweiligen Befüllungsstruktur, insbesondere der Geometrie der Verbindungselemente und des kanalförmigen oder kammerförmigen Teils der Befüllungsstruktur im Bereich des Paars von Verbindungselementen;
- der Art des Phasenwechselmaterials; und/oder
- der Art des Prozessmediums im ersten und/oder zweiten Kanalabschnitt und/oder jedem weiteren Kanalabschnitt, sowie deren Fließdruck; und/oder
- der Art des verwendeten Enzyms und dessen Konzentration; und/oder
- den Eigenschaften des externen Einflusses.

Die Aktivierungszeit beginnt zu Beginn des Schrittes e) des erfindungsgemäßen Verfahrens und endet, wenn eine fluidische Verbindung zwischen dem ersten und zweiten Kanalabschnitt besteht.

Die Art des Phasenwechselmaterials hat einen großen Einfluss auf die Aktivierungszeit der erfindungsgemäßen Vorrichtung. In einer Ausführungsform der vorliegenden Erfindung kann durch die Verwendung von Polyethylenglycol (PEG) mit verschiedenen Kettenlängen Einfluss auf die Aktivierungszeit genommen werden. Je kürzer die Kettenlänge ist, desto besser ist dessen Löslichkeit. Durch die Wahl der Kettenlänge kann daher die Geschwindigkeit beeinflusst werden, in der das PEG in der Befüllungsstruktur, insbesondere im Bereich eines Paares von Verbindungselementen, von einem wässrigen Prozessmedium aufgelöst wird.

Die Art des Prozessmediums im ersten und/oder zweiten Kanalabschnitt und/oder jedem weiteren Kanalabschnitt kann je nach Löslichkeit des Phasenwechselmaterials in diesem damit einen Einfluss auf die Aktivierungszeit nehmen. Ebenso hat der Fließdruck der Prozessmedien einen Einfluss auf die Geschwindigkeit, mit der das gelöste Phasenwechselmaterial abtransportiert wird. Der Fließdruck kann zudem zum Ende des Auflöseprozesses des Phasenwechselmaterials in Abhängigkeit von den Dimensionen der Befüllungsstruktur und der Kanalabschnitte zu einem Durchbrechen des Phasenwechselmaterials führen. In diesem Fall wird das Phasenwechselmaterial nicht vollständig gelöst, sondern festes Material bricht heraus und wird mit dem Prozessmedium oder den Prozessmedien abtransportiert.

Die Geometrie der Befüllungsstruktur, insbesondere der Verbindungselemente beeinflusst wiederum die Kontaktfläche des oder der Prozessmedien mit dem Phasenwechselmaterial. Je größer die Kontaktfläche ist, desto schneller wird die durch das Phasenwechselmaterial aufgebaute Barriere abgebaut bzw. gelöst (bei Verwendung des gleichen Phasenwechselmaterials). Darüber hinaus legt die Geometrie der Befüllungsstruktur fest, wie viel Phasenwechselmaterial als Barriere "im Weg" steht. Insbesondere der Durchmesser der plötzlichen Ausdehnungen oder deren Breite, je nachdem ob diese einen runden oder eckigen Querschnitt aufweisen, spielen eine Rolle. Weiterhin die Maße des kanalförmigen oder kammerförmigen Teils der Befüllungsstruktur im Bereich eines Paares von Verbindungselementen.

Ebenso hat die Art und Konzentration eines Enzyms in einem oder mehreren Prozessmedien einen Einfluss auf die Geschwindigkeit, mit der das Phasenwechselmaterial abgebaut wird.

Als äußere Einflüsse können beispielsweise Wärme oder elektromagnetische Strahlung dienen. Dabei hat die Temperatur der eingebrachten Wärme oder die Intensität und Wellenlänge der elektromagnetischen Strahlung einen Einfluss auf die Aktivierungszeit eines Paares von Verbindungselementen.

Die genannten Einflüsse auf die Aktivierungszeit sind vorteilhafterweise sehr gut kontrollier- und reproduzierbar, womit auch die Aktivierungszeit eines Paares von Verbindungselementen vorteilhafterweise sehr gut reproduziert werden kann. Das heißt, vorteilhafterweise kann die Aktivierungszeit für ein Paar von Verbindungselementen mit einem Fehler $\leq 12,5 \%$ reproduziert werden.

Wird das Phasenwechselmaterial in der mikrofluidischen Vorrichtung gelöst oder enzymatisch abgebaut, eignen sich aufgrund der zeitlich definierbaren und hilfsenergiefreien Funktionsausübung derartige mikrofluidische Vorrichtungen bevorzugt für den Einsatz in autarken mikrofluidischen Systemen.

Mikrofluidisches Ventil/Mikrofluidischer Mischer

In einer bevorzugten Ausführungsform wird erfindungsgemäß durch ein Paar von Verbindungselementen und den kanalförmigen Teil oder kammerförmigen Teil der Befüllungsstruktur sowie die daran angrenzenden Kanalabschnitte ein mikrofluidisches Ventil oder ein mikrofluidischer Mischer bereitgestellt.

Das heißt, die mikrofluidische Vorrichtung kann im Bereich eines Paares von Verbindungselementen durch das Phasenwechselmaterial Öffnerfunktionen eines Ventils oder Mischfunktionen ausüben, wobei die Aktivierungszeit die zeitliche Abfolge sowie das Zeitverhalten der Weiterleitung oder Durchmischung eines ersten Prozessmediums in einem ersten Kanalabschnitt und eines zweiten Prozessmediums in einem zweiten Kanalabschnitt festlegt.

Die Aktivierungszeit eines Paares von Verbindungselementen hängt von den bereits genannten Faktoren ab, durch die, direkt Einfluss auf das Zeitverhalten der Durchmischung der Prozessmedien im ersten und zweiten Kanalsystem Kanalabschnitt genommen werden.

Durch die Wahl der oben genannten Faktoren kann vorteilhafterweise eine zeitlich definierte Auflösung der Barriere in der Befüllungsstruktur erreicht werden und damit eine genau definierte Aktivierungszeit. Die Befüllungsstruktur kann damit im Bereich eines Paares von Verbindungselementen in einer Ausführungsform Ventilfunktionen innerhalb eines mikrofluidischen Systems wahrnehmen.

In einer weiteren Ausführungsform kann durch die zeitlich definierte Auflösung der Barriere des Phasenwechselmaterials im Bereich eines Paares von Verbindungselementen auch zeitlich definiert eine Durchmischung von zwei Flüssigkeiten in einem Mischer ermöglicht werden. In dieser Ausführungsform weisen der erste und der zweite Kanalabschnitt weiterhin einen kammerförmigen Teil im Kontaktbereich mit den Verbindungselementen eines Paares von Verbindungselementen auf. Diese kammerförmigen Teile dienen dann als Mischvolumen. Die kammerförmigen Teile des ersten und zweiten Kanalabschnitts und jedes weiteren Kanalabschnitts können beispielsweise die Form eines Quaders, Zylinders oder eines elliptischen Zylinders aufweisen. Die Höhe des kammerförmigen Teils entspricht dabei der Höhe des kanalförmigen Teils der Kanalabschnitte. In einer bevorzugten Ausführungsform weist der kammerförmige Teil des ersten Kanalabschnittes die gleiche Geometrie auf, wie der kammerförmige Teil des zweiten Kanalabschnittes. Besonders bevorzugt weist in einer Ausführungsform der kanalförmige Teil der Befüllungsstruktur ebenfalls einen kammerförmigen Teil auf, dessen Geometrie der Geometrie der kammerförmigen Teile des ersten und zweiten Kanalabschnitts entsprechen.

In einer Ausführungsform der vorliegenden Erfindung weist die mikrofluidische Vorrichtung einen oder mehrere mikrofluidische Ventile und/oder einen oder mehrere mikrofluidische Mischer auf. Dabei werden die mikrofluidischen Ventile und/oder mikrofluidischen Mischer in einer Ausführungsform mit Hilfe der mindestens einen Befüllungsstruktur der mikrofluidischen Vorrichtung umgesetzt, indem diese mehrere Paare von Verbindungselementen aufweist. In dieser Ausführungsform können mit einer Befüllungsstruktur sowohl mikrofluidische Mischer als auch mikrofluidische Ventile bereitgestellt werden. Vorteilhafterweise können deren Aktivierungszeiten, wie bereits beschrieben, jeweils separat für jeden mikrofluidischen Mischer und/oder jedes mikrofluidisches Ventil eingestellt werden.

In einer weiteren Ausführungsform weist die erfindungsgemäße mikrofluidische Vorrichtung mehrere Befüllungsstrukturen auf. In dieser Ausführungsform können ebenfalls mikrofluidische Mischer und/oder mikrofluidische Ventile mit unterschiedlichen Zeitverhalten in einer mikrofluidischen Vorrichtung bereitgestellt werden. In dieser Ausführungsform kann die Aktivierungszeit der mikrofluidischen Mischer und/oder mikrofluidischen Ventile zudem durch das Befüllen der einzelnen Befüllungsstrukturen mit verschiedenen Phasenwechselmaterialien bestimmt werden. Erfindungsgemäß kann die erfindungsgemäße mikrofluidische Vorrichtung beliebig viele Befüllungsstrukturen aufweisen.

In einer Ausführungsformen weist die mikrofluidische Vorrichtung daher weitere Kanalabschnitte auf, die durch die mindestens eine Befüllungsstruktur oder auch weitere Befüllungsstrukturen fluidisch miteinander verbunden werden können.

Im Folgenden wird die vorliegende Erfindung weiterhin anhand von 14 Figuren und 5 Ausführungsbeispielen näher erläutert.

Figur 1 (A) bis (C) stellen drei verschiedene Ausführungsformen der erfindungsgemäßen mikrofluidischen Vorrichtung dar;

Figur 2 (A) und (B) stellen die Dimensionen einer Ausführungsform der mikrofluidischen Vorrichtung dar;

Figur 3 stellt den Aufbau einer Ausführungsform der mikrofluidischen Vorrichtung dar;

Figur 4 (A) bis (C) stellen die Aktivierung eines Paars von Verbindungselementen einer Befüllungsstruktur einer mikrofluidischen Vorrichtung dar;

Figur 5 (A) und (B) stellen den Aufbau und die Dimensionen einer Ausführungsform der mikrofluidischen Vorrichtung dar;

Figur 6 (A) bis (D) stellen die Aktivierung eines Paars von Verbindungselementen einer Befüllungsstruktur einer mikrofluidischen Vorrichtung dar;

Figur 7     stellt eine Ausführungsform der erfindungsgemäßen mikrofluidischen Vorrichtung dar;

Figur 8     stellt eine Ausführungsform der erfindungsgemäßen mikrofluidischen Vorrichtung mit einem Paar von Verbindungselementen mit je 7 Ausdehnungen dar;

Figur 9     stellt eine Ausführungsform der erfindungsgemäßen mikrofluidischen Vorrichtung mit einem Paar von Verbindungselementen mit je einer Ausdehnung dar;

Figur 10     stellt eine Ausführungsform der erfindungsgemäßen mikrofluidischen Vorrichtung als mikrofluidischer Mischer dar;

Figur 11     (A) und (B) stellen eine Ausführungsform der erfindungsgemäßen mikrofluidischen Vorrichtung dar;

Figur 12     (A) bis (D) stellen ein Beispiel für die Dimensionen einer Ausführungsform der erfindungsgemäßen mikrofluidischen Vorrichtung dar;

Figur 13     (A) bis (D) stellen die Aktivierung eines Paars von Verbindungselementen einer Befüllungsstruktur einer Ausführungsform der mikrofluidischen Vorrichtung dar;

Figur 14     (A) bis (E) stellen ein Beispiel für die Dimensionen einer Ausführungsform der erfindungsgemäßen mikrofluidischen Vorrichtung dar;

Figur 15     stellt drei Befüllungsstrukturen dar, die in einem mikrofluidischen System integriert sind;

Figur 16     (A) und (B) stellen eine mikrofluidische Vorrichtung mit einer Befüllungsstruktur mit einem kanalförmigen Teil dar;

Figur 17     (A) bis (C) stellen eine mikrofluidische Vorrichtung mit einer Befüllungsstruktur dar.

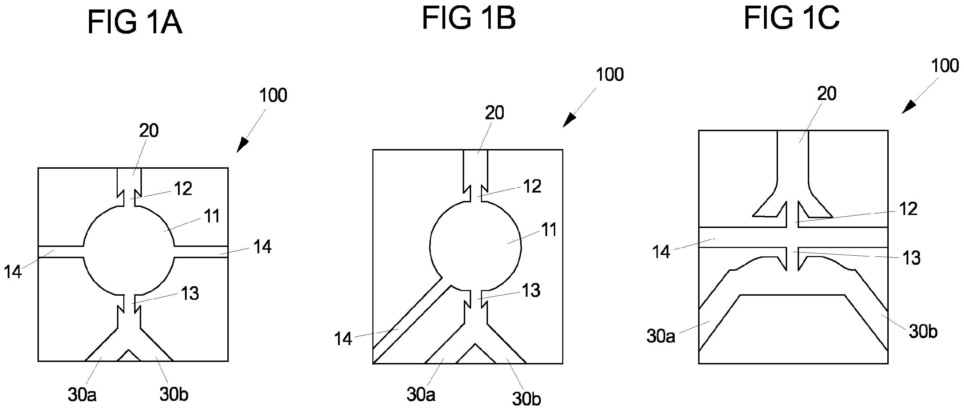

Figur 1 (A) bis (C) stellen drei verschiedene Ausführungsformen der erfindungsgemäßen mikrofluidischen Vorrichtung 100 dar. In allen drei Ausführungsformen kann die mikrofluidische Vorrichtung 100 als mikrofluidisches Ventil genutzt werden, um einen Flüssigkeitsstrom zwischen einem ersten Kanalabschnitt 20 und einem zweiten Kanalabschnitt 30a, 30b zu steuern. Figur 1 (A) stellt eine mikrofluidische Vorrichtung mit einer Befüllungsstruktur dar, die einen kammerförmigen Teil 11, zwei kanalförmige Teile 14 und Verbindungselemente mit je einer plötzlichen Ausdehnung 12, 13 aufweist. Die Ausdehnung 12 verbindet den kammerförmigen Teil 11 der Befüllungsstruktur mit einem ersten Kanalabschnitt 20 und die zweite Ausdehnung 13 verbindet den kammerförmigen Teil 11 der Befüllungsstruktur mit einem zweiten Kanalabschnitt 30. Das Verbindungselement mit der plötzlichen Ausdehnung 12 und das Verbindungselement mit der plötzlichen Ausdehnung 13 bilden damit ein erfindungsgemäßes Paar von Verbindungselementen. Der zweite Kanalabschnitt besteht aus einem Einlass 30a und einem Bypass 30b. Ein kanalförmiger Teil 14 der Befüllungsstruktur verläuft bis zum kammerförmigen Teil 11 der Befüllungsstruktur und darüber hinaus.

Figur 1 (B) stellt eine weitere Ausführungsform der erfindungsgemäßen mikrofluidischen Vorrichtung 100 dar. Der kanalförmige Teil 14 der Befüllungsstruktur endet in dieser Ausführungsform im kammerförmigen Teil 11. Alle weiteren Strukturen entsprechen dem Aufbau der Figur 1 (A).

Figur 1 (C) stellt eine mikrofluidische Vorrichtung 100 dar, bei der die Befüllungsstruktur 14 kanalförmig verläuft und zwei plötzliche Ausdehnungen 12, 13 aufweist. Die plötzliche Ausdehnung 12 verbindet den kanalförmigen Teil 14 der Befüllungsstruktur mit einem ersten Kanalabschnitt 20 und die zweite Ausdehnung 13 verbindet den kanalförmigen Teil 14 der Befüllungsstruktur mit einem zweiten Kanalabschnitt 30.

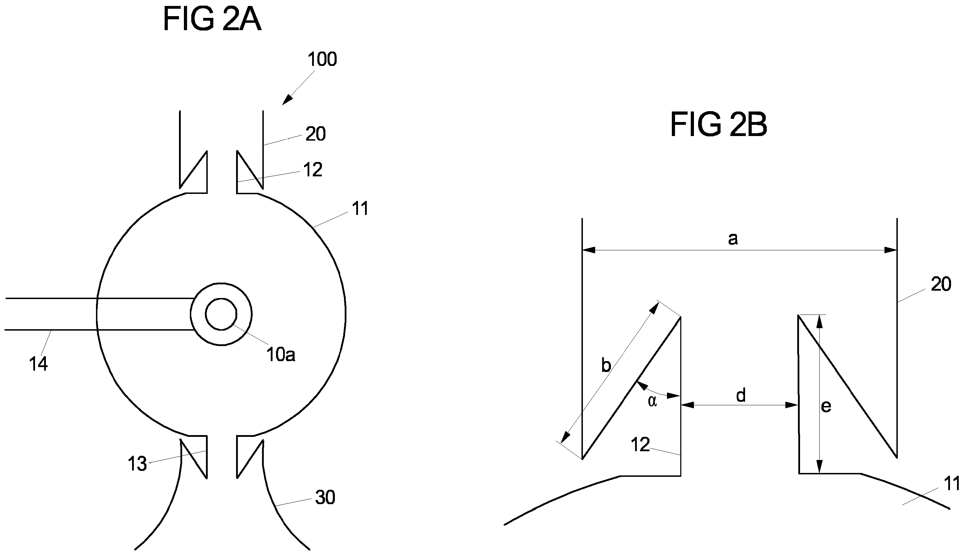

**Figur 2 (A) und (B)** stellen ein Beispiel für den Aufbau und die Dimensionierung einer erfindungsgemäßen mikrofluidischen Vorrichtung 100 dar. Figur 2 (A) stellt einen Ausschnitt mit einer Befüllungsstruktur mit einem kammerförmigen Teil 11 dar. Sowie mit einem Verbindungselement mit einer Ausdehnung 12, die eine Verbindung zum ersten Kanalabschnitt 20 darstellt und mit einem Verbindungselement mit einer Ausdehnung 13, die eine Verbindung zum zweiten Kanalabschnitt 30 darstellt. Die mikrofluidische Vorrichtung 100 ist durch drei Strukturträger aufgebaut. Der erste Strukturträger umfasst den kammerförmigen Teil 11 der Befüllungsstruktur, sowie den ersten und den zweiten Kanalabschnitt 20, 30. Der kammerförmige Teil der Befüllungsstruktur weist einen Durchmesser von 1,2 mm und eine Kammertiefe von 0,250 mm auf.

Der zweite Strukturträger bildet einen Zulauf 10a vom kanalförmigen Teil des Strukturgebers 14 zum kammerförmigen Teil 11. Der Zulauf 10a weist einen Durchmesser von 0,15 mm und eine Tiefe von 0,250 mm auf. Ein dritter Strukturträger ist auf dem zweiten angeordnet und umfasst den kanalförmigen Teil der Befüllungsstruktur 14. Dieser weist eine Breite von 0,15 mm und eine Tiefe von 0,250 mm auf.

Figur 2 (B) stellt einen Ausschnitt des ersten Kanalabschnitts 20, des kammerförmigen Teils der Befüllungsstruktur 11 und der Ausdehnung 12 der Befüllungsstruktur dar. In der abgebildeten Ausführungsform haben die Bauteile folgende Abmaße:

| | |
|---|---|
| a | 0,402 mm |
| b | 0,22 mm |

(fortgesetzt)

| | |
|---|---|
| $\alpha$ | 35° |
| d | 0,15 mm |
| e | 0,2 mm |

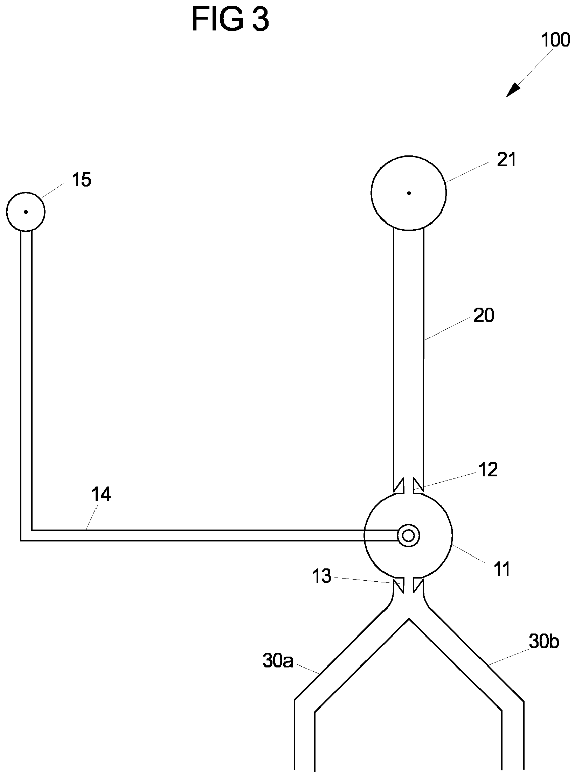

**Figur 3** stellt die Ausführungsform aus Figur 2 (A) und (B) zusätzlich noch mit dem Einlass 15 dar. Dieser befindet sich ebenfalls im dritten Strukturträger. Über den Einlass 15 kann das Phasenwechselmaterial 40 zugegeben werden. Das Paar von Verbindungselementen, mit den plötzlichen Ausdehnungen 11, 12 wirkt in dieser Ausführungsform als mikrofluidisches Ventil. Zunächst wird der kammerförmige Teil 11 der Befüllungsstruktur mit einem wasserlöslichen aufgeschmolzenen Phasenwechselmaterial 40 gefüllt und das Phasenwechselmaterial durch Abkühlen in den festen Zustand überführt. Anschließend wird der zweite Kanalabschnitt über den Einlass 30a mit Prozessmedium gefüllt, welches an dem Phasenwechselmaterial 40 an der Ausdehnung 13 vorbeiströmt. Der Bypass 30b wird geschlossen. Mit der Zeit löst sich das Phasenwechselmaterial 40 auf und das Prozessmedium aus dem zweiten Kanalabschnitt 30 fließt durch den kammerförmigen Teil der Befüllungsstruktur 11 in den ersten Kanalabschnitt 20.

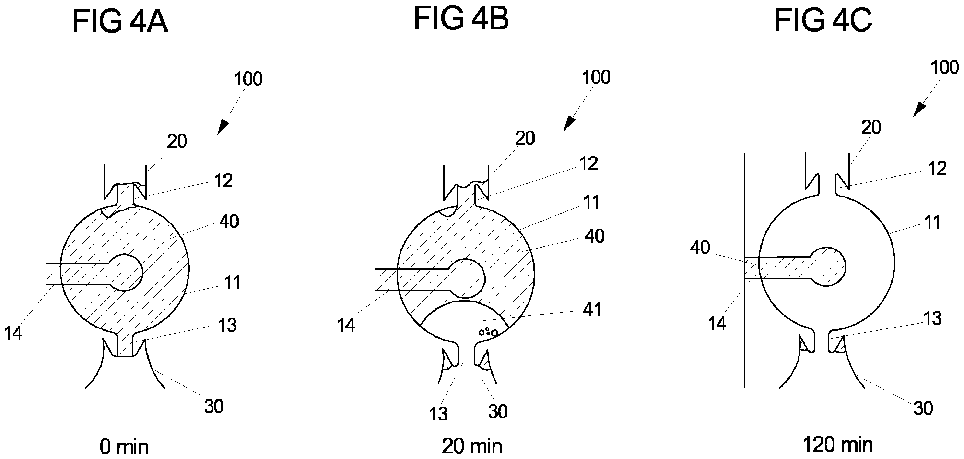

Figur 4 (A) bis (C) stellen die Aktivierung eines Paares von Verbindungselementen einer Befüllungsstruktur in einer Ausführungsform der mikrofluidischen Vorrichtung 100, die mit Phasenwechselmaterial 40 gefüllt ist, dar. Die Figuren sind im Ausführungsbeispiel 1 näher erläutert.

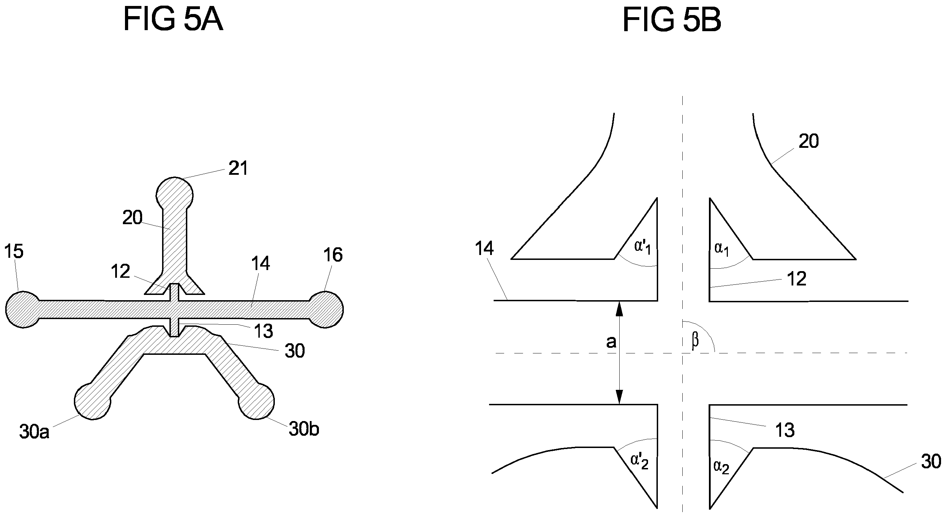

**Figur 5 (A) und (B)** stellen eine weitere Ausführungsform der erfindungsgemäßen Vorrichtung dar. Die Befüllungsstruktur weist in dieser Ausführungsform einen kanalförmigen Teil 14 mit einem Einlass 15 und einem Auslass 16 auf (Figur 5 (A)). Der erste Kanalabschnitt 20 ist durch die Ausdehnung 12 des ersten Verbindungselementes mit dem kanalförmigen Teil der Befüllungsstruktur 14 verbunden und der zweite Kanalabschnitt 30 ist durch die Ausdehnung 13 des zweiten Verbindungselementes mit dem kanalförmigen Teil der Befüllungsstruktur 14 verbunden. Figur 5 (B) zeigt einen Ausschnitt der Figur 5 (A). Die Breite des kanalförmigen Teils der Befüllungsstruktur 14 hat einen Einfluss auf die Aktivierungszeit des Paars von Verbindungselementen und kann daher verschieden gewählt werden. Die Breite a kann beispielsweise 0,3 mm, 0,25 mm oder 0,15 mm betragen. In dieser Ausführungsform sind beide plötzlichen Ausdehnungen 12, 13 der Verbindungselemente orthogonal zum kanalförmigen Teil der Befüllungsstruktur 14 ausgerichtet. Dies wird durch den Winkel $\beta$ illustriert. Weiterhin ist der Öffnungswinkel für jede plötzliche Ausdehnung 12, 13 dargestellt.

Die plötzliche Ausdehnung 12 weist die Öffnungswinkel $\alpha_1$ und $\alpha_1'$ auf, wobei gilt $\alpha_1 = \alpha_1'$. Die plötzliche Ausdehnung 13 weist die Öffnungswinkel $\alpha_2$ und $\alpha_2'$ auf, wobei gilt $\alpha_2 = \alpha_2'$.

Die Befüllung des kanalförmigen Teils der Befüllungsstruktur 14 mit dem Phasenwechselmaterial 40 erfolgt über den Einlass 15. Die Befüllung erfolgt dabei über die gesamte Länge der Befüllungsstruktur 14 bis zum Auslass 16. Aufgrund der plötzlichen Ausdehnung 12, 13 der Verbindungselemente zum ersten und zweiten Kanalabschnitt 20, 30 werden die Kanalabschnitte 20, 30 nicht mit Phasenwechselmaterial 40 befüllt. Ein Prozessmedium, dass über den Einlass 30a des zweiten Kanalabschnittes an der mit Phasenwechselmaterial 40 befüllten Befüllungsstruktur 14 vorbeiströmt und in Richtung Bypass 30b strömt, löst das Phasenwechselmaterial über die Zeit auf, so dass nach einer durch die Geometrie, das Prozessmedium und den Fließdruck definierten Zeit ein Durchbruch zum ersten Kanalabschnitt 20 erfolgt. Nun wird auch der erste Kanalabschnitt 20 mit dem Prozessmedium befüllt.

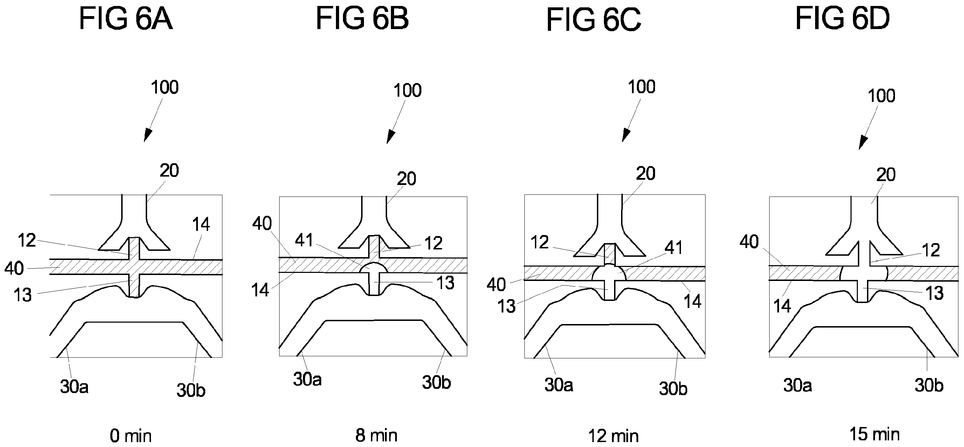

Figuren 6 (A) bis (D) stellen die Aktivierung eines Paares von Verbindungselementen dar, wie in Ausführungsbeispiel 2 genutzt. Der kanalförmige Teil der Befüllungsstruktur 14 weist eine Breite a von 0,15 mm auf. Die Aktivierung beginnt bei Figur 6 (A). In diesem Zustand ist die Befüllungsstruktur vollständig mit dem Phasenwechselmaterial 40 gefüllt und über den Kanal 30a des zweiten Kanalabschnitts 30 wird das Prozessmedium (in diesem Fall Wasser) zugeführt. Nach 8 min hat sich bereits ein Teil des Phasenwechselmaterials 40 im Bereich der Ausdehnung 13 (Bereich 41) des zweiten Verbindungselementes aufgelöst. Im Bereich 41 des Verbindungselementes der Befüllungsstruktur ist bereits Prozessmedium mit gelöstem Phasenwechselmaterial vorhanden. Nach 12 min ist noch mehr Phasenwechselmaterial aufgelöst und lediglich die plötzliche Ausdehnung 12 des ersten Verbindungselementes zum ersten Kanalabschnitt 20 ist noch mit Phasenwechselmaterial 40 ausgefüllt. Nach 15 min ist das Phasenwechselmaterial derart aufgelöst, dass das Prozessmedium vom zweiten Kanalabschnitt 30 in den ersten Kanalabschnitt 20 durch den kanalförmigen Teil der Befüllungsstruktur 14 und die beiden Verbindungselemente der Befüllungsstruktur fließen kann.

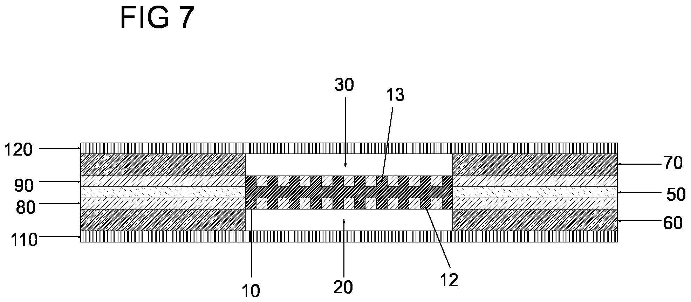

**Figur 7** stellt eine weitere Ausführungsform der mikrofluidischen Vorrichtung dar. Die mikrofluidische Vorrichtung 100 ist in dieser Ausführungsform in mehreren Ebenen durch Strukturträger aufgebaut. Der erste Kanalabschnitt 20 befindet sich im Strukturträger 60 und wird zu einer Seite durch einen unteren Verschlusslayer 110 verschlossen. Zur anderen Seite folgt ein zweiter Strukturträger 80, der Perforationen im Bereich einer Überlappungsfläche mit der danach folgenden Befüllungsstruktur 10 aufweist. Die Befüllungsstruktur 10 weist ein erstes Verbindungselement auf, welches die Ausdehnungen 12 aufweist, die durch die Perforationen im Strukturträger 80 ausgebildet werden.

Der Befüllungsstruktur 10 wird durch einen nächsten Strukturträger 90 verschlossen, der ebenfalls in Bereich einer Überlappungsfläche mit einem zweiten Kanalabschnitt 30 Perforationen aufweist. Die Befüllungsstruktur 10 weist ein zweites Verbindungselement auf, welches die Ausdehnungen 13 aufweist, die durch die Perforationen im Strukturträger 90 ausgebildet werden. Der zweite Kanalabschnitt befindet sich in einem weiteren Strukturträger 70 und liegt direkt auf dem Strukturträger 90 auf. Der zweite Kanalabschnitt 30 wird durch einen oberen Verschlusslayer 120, der zumindest über Ein- und Auslassöffnungen für den ersten Kanalabschnitt 20, den zweiten Kanalabschnitt 30 sowie die Befüllungsstruktur 10 verfügt, verschlossen. Die Befüllung der Befüllungsstruktur 10 mit dem Phasenwechselmaterial 40 erfolgt über einen zugehörigen Einlass 15.

Im Bereich der Perforationen der Strukturträger 80 und 90 werden aufgrund der plötzlichen Ausdehnung 12, 13 der Verbindungselemente lediglich die plötzlichen Ausdehnungen 12, 13 mit Phasenwechselmaterial gefüllt, jedoch nicht der erste oder zweite Kanalabschnitt 20, 30. Ein Prozessmedium, dass über den Einlass des ersten Kanalabschnitts 20 und/oder den Einlass des zweiten Kanalabschnitts 30, an den mit Phasenwechselmaterial 40 befüllten plötzlichen Ausdehnungen 12, 13 in den Strukturträgern 80 und 90 und damit der Befüllungsstruktur 10 vorbeiströmt, löst das Phasenwechselmaterial 40 über die Zeit auf, so dass nach einer durch die Geometrie, das Prozessmedium und den Fließdruck definierten Zeit ein Durchbruch zwischen dem ersten Kanalabschnitt 20 und dem zweiten Kanalabschnitt 30 oder dem zweiten Kanalabschnitt 30 und dem ersten Kanalabschnitt 20 erfolgt. So kann z.B. eine Mischung der Medien aus beiden Kanalabschnitten erfolgen bzw. der zweite Kanalabschnitt 30 mit Medium befüllt werden.

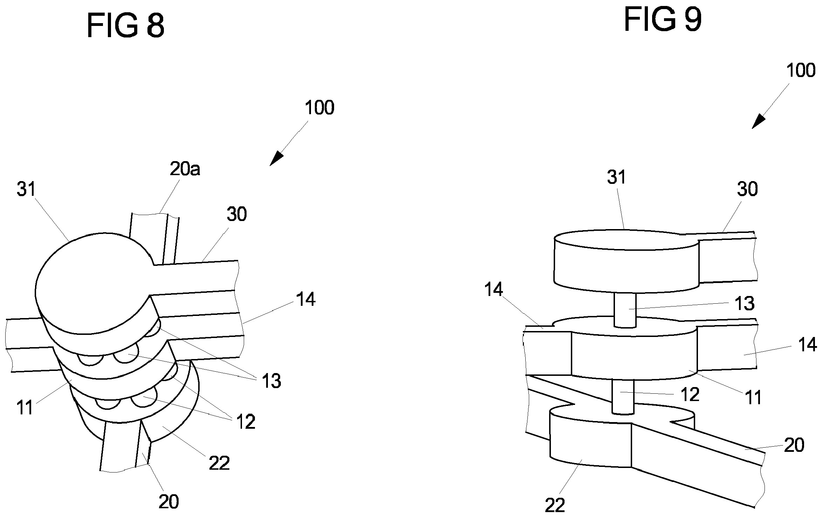

**Figur 8** stellt eine Ausführungsform der mikrofluidischen Vorrichtung 100 mit einem Paar von Verbindungselementen da, wobei jedes Verbindungselement je 7 Ausdehnungen 12, 13 aufweist.

**Figur 9** stellt eine Ausführungsform der mikrofluidischen Vorrichtung 100 mit einem Paar von Verbindungselementen da, wobei jedes Verbindungselement je eine Ausdehnung 12, 13 aufweist. Der erste Kanalabschnitt 20 weist in dieser Ausführungsform einen kammerförmigen Teil 22 auf und der zweite Kanalabschnitt 30 einen kammerförmigen Teil 31. Im Bereich der kammerförmigen Teile 22 und 31 sind die plötzlichen Ausdehnungen 12 und 13 der Verbindungselemente der Befüllungsstruktur angeordnet.

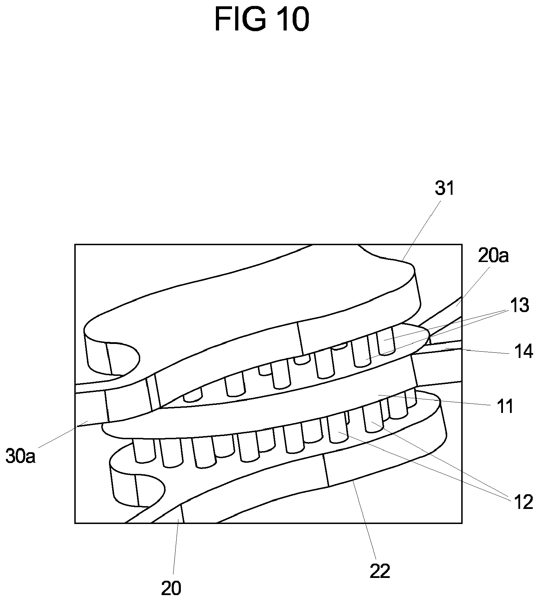

**Figur 10** stellt eine Ausführungsform der mikrofluidischen Vorrichtung 100 dar, die einen mikrofluidischen Mischer zur Verfügung stellt. Der Aufbau ähnelt stark dem Aufbau der mikrofluidischen Vorrichtung der Figur 8, jedoch weisen sowohl der erste Kanalabschnitt 20 als auch der zweite Kanalabschnitt 30 einen Bypass 20a, 30b auf. Die kammerförmigen Teile des ersten und zweiten Kanalabschnittes 22, 31 dienen erfindungsgemäß als Mischvolumen für die Prozessmedien.

In den Ausführungsformen der Figuren 7 bis 9 kann unter anderem durch die Variation der Anzahl der plötzlichen Ausdehnungen 12, 13 der Verbindungselemente und deren Dimensionen Einfluss auf die Aktivierungszeit der mikrofluidischen Vorrichtung genommen werden.

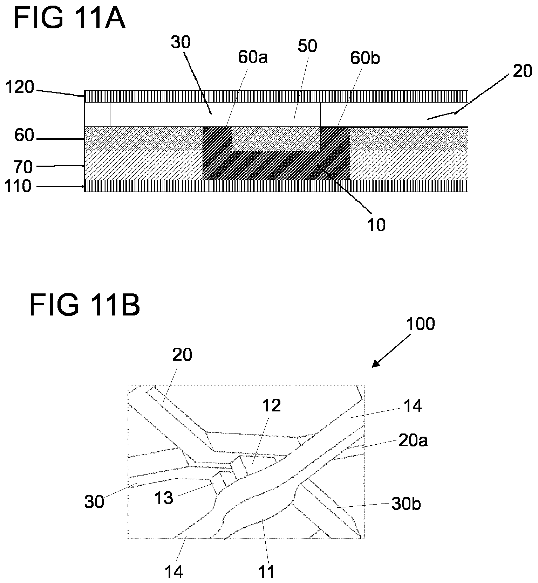

**Figuren 11 (A) und (B)** stellen eine weitere Ausführungsform der mikrofluidischen Vorrichtung 100 mit einer Befüllungsstruktur mit einem Paar von Verbindungselementen dar. In dieser Ausführungsform ist die mikrofluidische Vorrichtung mit Strukturträgern aufgebaut (Figur 11 (A)). In einem ersten Strukturträger 70 ist die Befüllungsstruktur 10 eingebracht. Der Strukturträger 70 wird zu einer Seite von einem Verschlusslayer 110 verschlossen. Über dem Strukturträger 70 befindet sich ein weiterer Strukturträger 60 in den zwei Perforationen 60a, 60b eingebracht sind. Oberhalb des Strukturträgers 60 befindet sich ein weiterer Strukturträger 50. Der Strukturträger 50 umfasst den ersten und den zweiten Kanalabschnitt 20, 30. Die Perforationen 60a, 60b bilden die plötzlichen Ausdehnungen der Verbindungselemente der Befüllungsstruktur, wobei die Perforation 60a die Ausdehnung 13 des Verbindungselementes zum zweiten Kanalabschnitt 30 darstellt und die Perforation 60b die Ausdehnung 12 des Verbindungselementes zum ersten Kanalabschnitt 20. Der Strukturträger 50 wird von einem Verschlusslayer 120 abgedeckt. Figur 11 (B) stellt den Aufbau noch einmal perspektivisch dar. Sowohl der erste als auch der zweite Kanalabschnitt 20, 30 weisen einen Bypass 20a, 30b auf. Die plötzlichen Ausdehnungen der Verbindungselemente, gebildet durch die Perforationen 60a, 60b, der Befüllungsstruktur sind in dieser Ausführungsform als quaderförmige Stufen ausgebildet. In dieser Ausführungsform sind das erste und zweite Verbindungselement des Paares von Verbindungelementen parallel zueinander angeordnet.

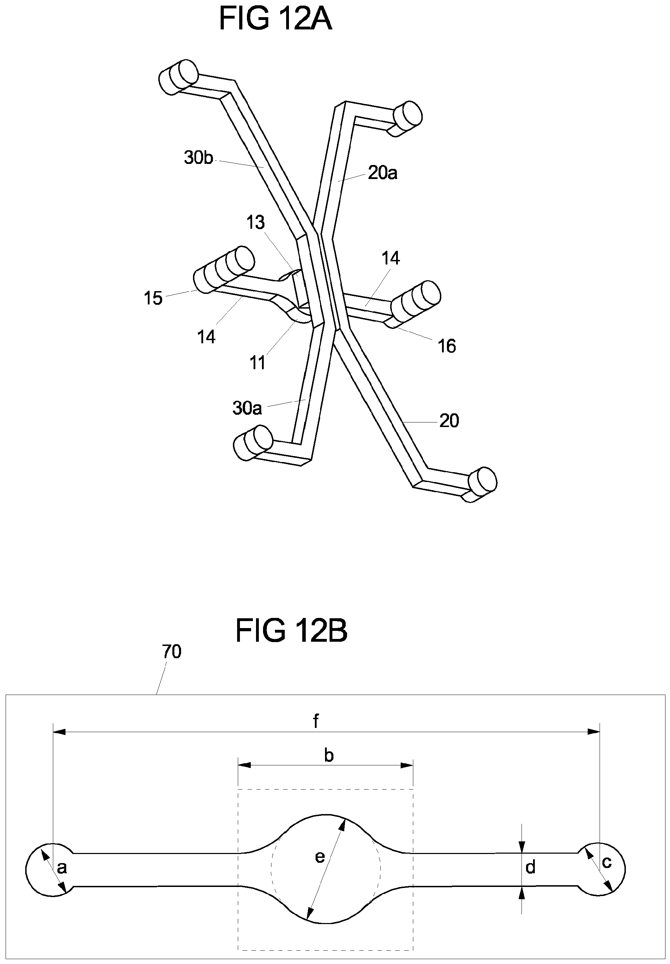

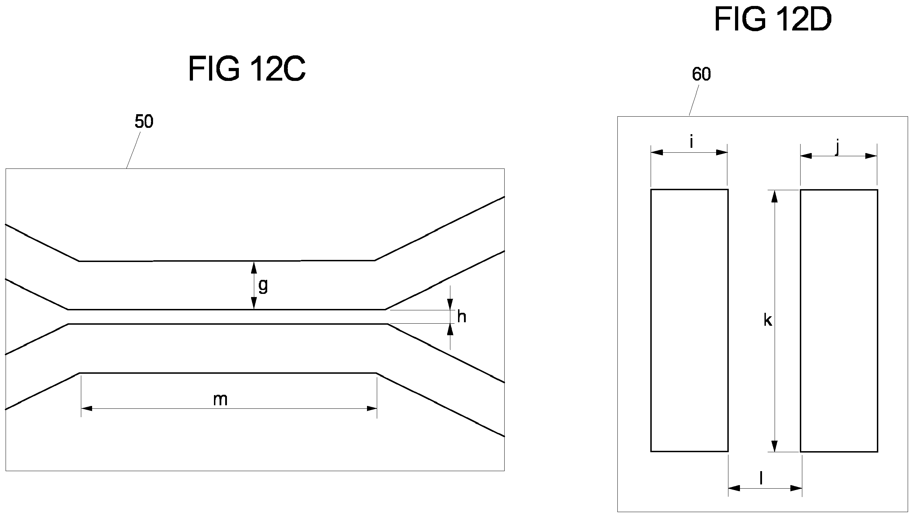

Figuren 12 (A) bis (D) stellen den Aufbau aus Figur 11B noch einmal mit beispielhaften Dimensionen dar. Die Figur 12 (B) stellt die Dimensionen der Strukturen im Strukturträger 70, die Figur 12 (C) die Dimensionen der Strukturen im Strukturträger 50 und die Figur 12 (D) die Dimensionen der Strukturen im Strukturträger 60 dar. Im Folgenden sind die Dimensionen zusammengefasst:

| a | 0,5 mm | g | 0,3 mm |
|---|--------|---|--------|
| b | 1,598 mm | h | 0,1 mm |
| c | 0,5 mm | i | 0,2 mm |
| d | 0,3 mm | j | 0,2 mm |

(fortgesetzt)

| e | 1 mm | k | 0,7 mm |
|---|------|---|--------|
| f | 5 mm | l | 0,2 mm |
|   |      | m | 2 mm   |

In einer bevorzugten Ausführungsform gilt m>k. Der kammerförmige Teil 11 der Befüllungsstruktur hat einen Durchmesser von 1 mm und eine Dicke von 0,25 mm. Die plötzlichen Ausdehnungen 12, 13 der Verbindungselemente sind als Stufen mit den Maßen 0,2 mm x 0,7 mm und einer Dicke von 0,25 mm ausgebildet. Der erste und zweite Kanalabschnitt 20, 30 weißen jeweils eine Dicke von 0,25 mm auf. Der Einlass 15 und der Auslass 16 weisen jeweils einen Durchmesser von 0,5 mm auf und eine Dicke von 0,375 mm.

In dieser Ausführungsform kann die Aktivierungszeit unter anderem durch die Dimension der Stufen 60a, 60b und deren Abstand zueinander und damit die Geometrie der Befüllungsstruktur beeinflusst werden. Durch Variation des Abstands zwischen den Stufen 60a, 60b kann mehr oder weniger Phasenwechselmaterial 40 als Barriere zwischen dem ersten und zweiten Kanalabschnitt 20, 30 dienen.

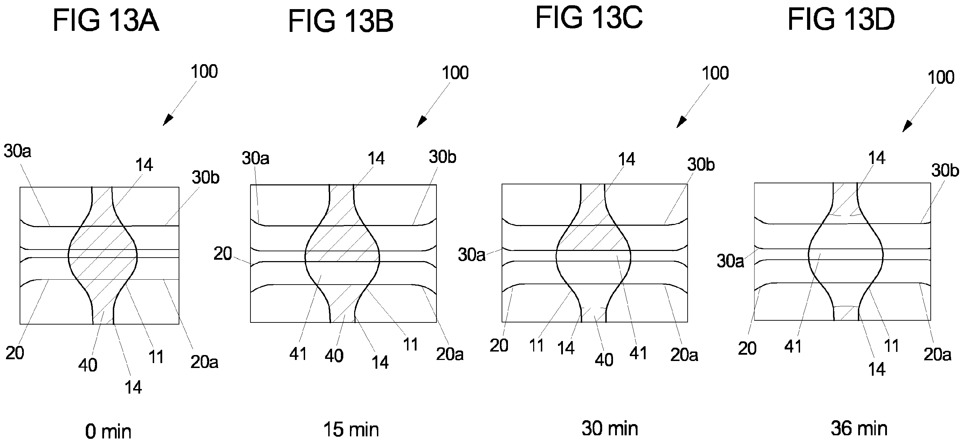

Figuren 13 (A) bis (D) stellen die Aktivierung einer Ausführungsform der mikrofluidischen Vorrichtung wie in den Figur 12 dargestellt dar. Eine nähere Beschreibung findet sich im Ausführungsbeispiel 5.

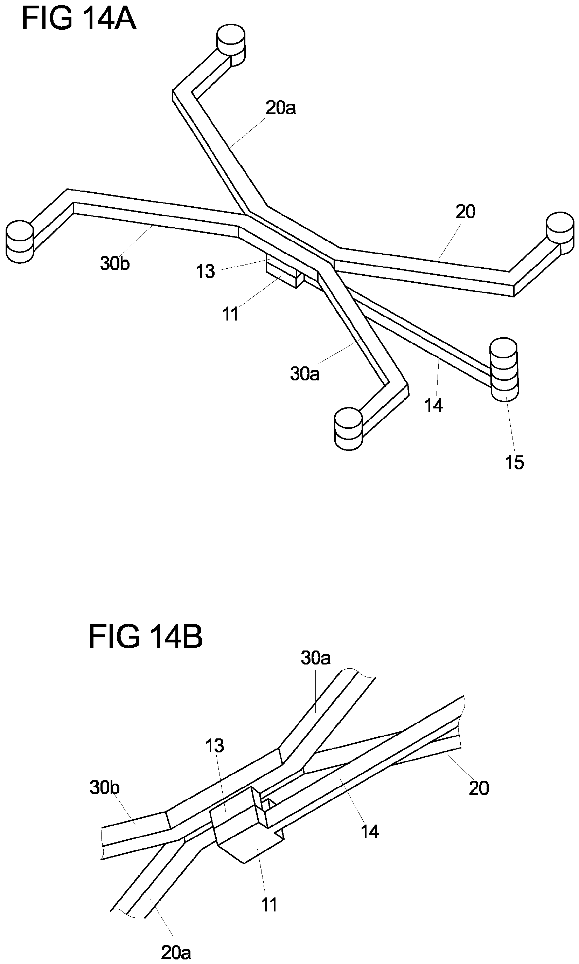

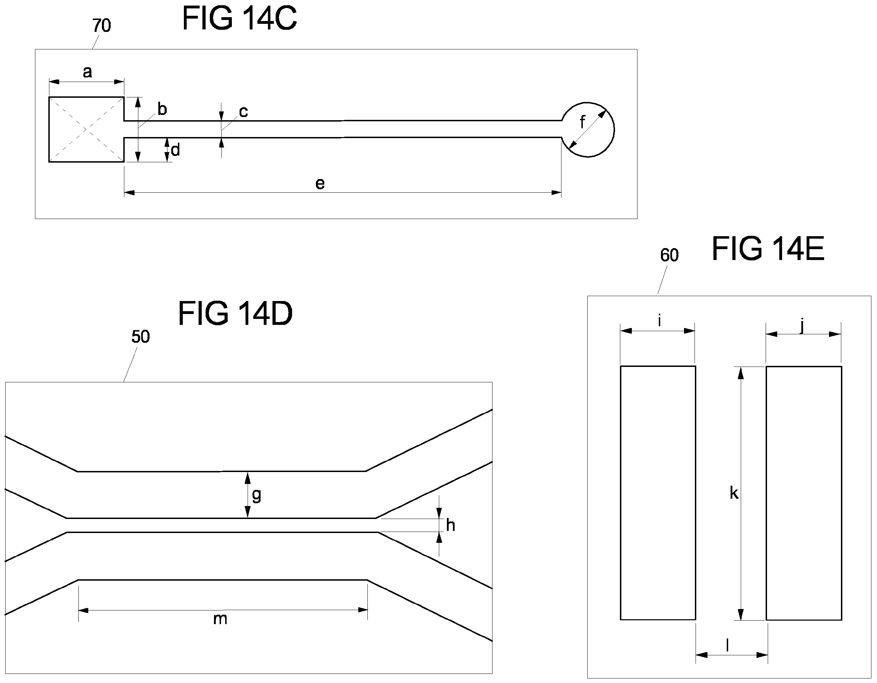

Figur 14 (A) bis (E) stellen eine weitere Ausführungsform der mikrofluidischen Vorrichtung mit einer Befüllungsstruktur mit einem Paar von Verbindungselementen dar. Die Ausführungsform ähnelt der Ausführungsform der Figuren 11 und 12, jedoch ist der kammerförmige Teil 12 der Befüllungsstruktur quaderförmig und der kanalförmige Teil 14 endet in diesem. Die Figuren 14 (C) bis (E) geben ein Beispiel für eine Dimensionierung der mikrofluidischen Vorrichtung in dieser Ausführungsform. Im Folgenden sind die Dimensionen zusammengefasst:

| a | 0,7 mm   | g | 0,3 mm |
|---|----------|---|--------|
| b | 0,6 mm   | h | 0,1 mm |
| c | 0,15 mm  | i | 0,2 mm |
| d | 0,225 mm | j | 0,2 mm |
| e | 4 mm     | k | 0,7 mm |
| f | 0,5 mm   | l | 0,2 mm |
|   |          | m | 2 mm   |

In einer bevorzugten Ausführungsform gilt m>k. Die plötzlichen Ausdehnungen 12, 13 der Verbindungselemente sind als Stufen mit den Maßen 0,2 mm x 0,7 mm und einer Dicke von 0,25 mm ausgebildet. Der erste und zweite Kanalabschnitt 20, 30 weißen jeweils eine Dicke von 0,25 mm auf. Der Einlass 15 weist einen Durchmesser von 0,5 mm auf und eine Dicke von 0,375 mm und der kammerförmige Teil 11 sowie der kanalförmige Teil 14 der Befüllungsstruktur weißen eine Dicke von 0,25 mm auf.

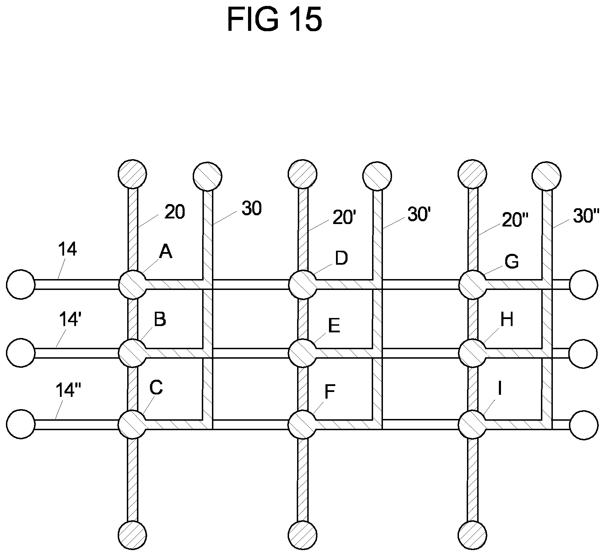

**Figur 15** stellt drei Befüllungsstrukturen dar, die in einem mikrofluidischen System integriert sind. Die drei Befüllungsstrukturen weisen drei kanalförmige Teile 14, 14', 14" auf. Ein erster Kanalabschnitt 20, 20', 20" und ein zweiter Kanalabschnitt 30, 30', 30" grenzen jeweils an kammerförmige Teile der kanalförmigen Teile 14, 14', 14" und bilden die Ventile/Mischer A bis I.

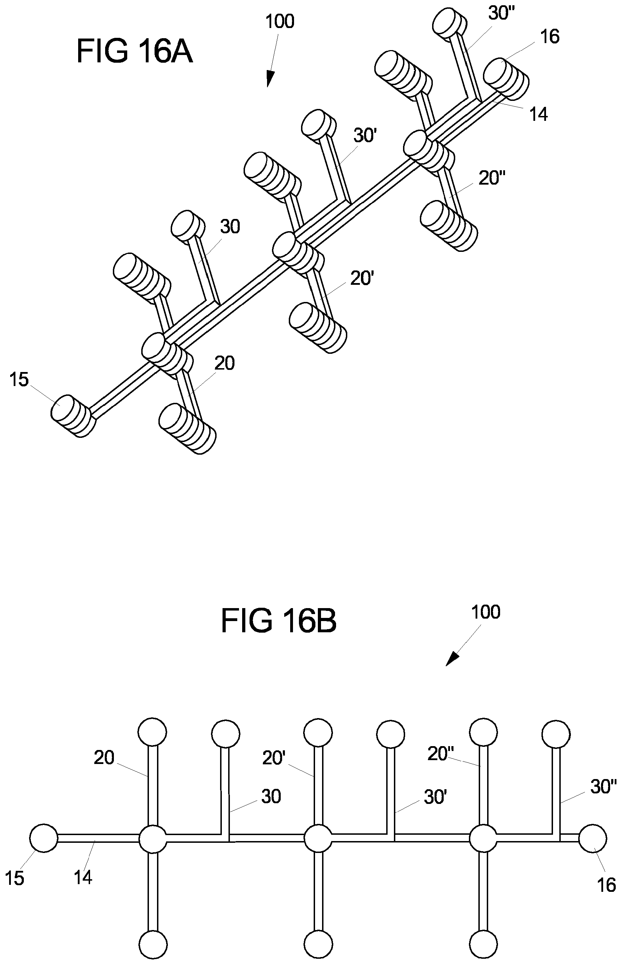

**Figur 16 (A) und (B)** stellen eine mikrofluidische Vorrichtung 100 mit einer Befüllungsstruktur mit einem kanalförmigen Teil 14 dar. Die mikrofluidische Vorrichtung 10 weist drei Paare von Verbindungselementen auf, die mit den Kanalabschnitten 20, 20', 20" und 30, 30', 30" drei Ventile/Mischer ausbilden. Figure 16 (A) zeigt die Ausführungsform perspektivisch und Figur 16 (B) in der Draufsicht.

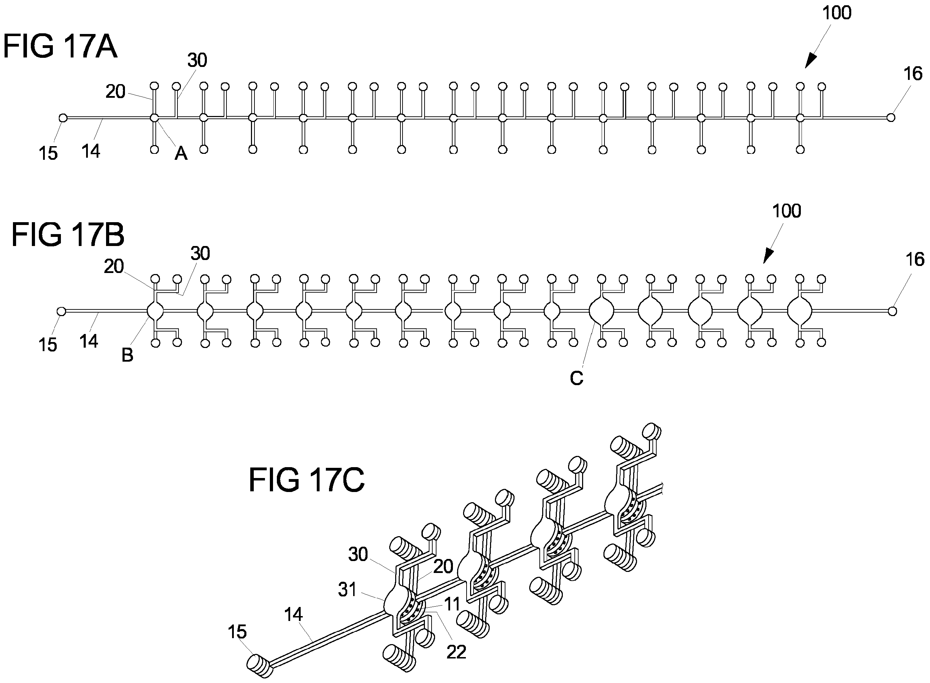

Figur 17 (A) bis (C) stellen ähnlich wie Figur 16 (A) und (B) eine mikrofluidische Vorrichtung mit einer Befüllungsstruktur 14 dar. In Figur 17 (A) werden 14 Ventile A gebildet, in Figur 17 (B) 14 Mischer. Dabei stellt die mikrofluidische Vorrichtung 100 in Figur 17 (B) 9 Mischer B mit einem Durchmesser der kammerförmigen Teile von 2 mm und 5 Mischer C mit einem Durchmesser der kammerförmigen Teile von 3 mm bereit. Figur 17 (C) zeigt einen perspektivischen Ausschnitt der Figur 17 (B).

**Ausführungsbeispiel 1 - Aktivierung einer mikrofluidischen Vorrichtung**

Figur 4 (A) bis (C) stellt die Aktivierung einer mikrofluidischen Vorrichtung mit einem Paar von Verbindungselementen, die ein mikrofluidisches Ventil bilden, dar. Der Aufbau der Vorrichtung entspricht der in Figur 3 dargestellten Anordnung. Figur 4 (A) stellt den Ausgangzustand dar, in dem das mikrofluidische Ventil geschlossen war. Der gesamte kammerförmige Teil 11 der Befüllungsstruktur war mit dem Phasenwechselmaterial 40 gefüllt. Als Phasenwechselmaterial 40 wurde eine PEG-Paste genutzt. Diese wies eine Zusammensetzung von PEG1000 (mittleres Molekulargewicht ~ 1000 g/mol) und PEG1500 (mittleres Molekulargewicht ~ 1500 g/mol) im Verhältnis 2:10 auf. Das Phasenwechselmaterial 40 wurde bei einer Temperatur von 50 °C aufgeschmolzen und über den Einlass 15 und den kanalförmigen Teil der Befüllungsstruktur 14 in den kammerförmigen Teil der Befüllungsstruktur 11 durch Kapillarkräfte eingebracht. Durch das Abkühlen der mikrofluidischen Vorrichtung bei Raumtemperatur härtete das Phasenwechselmaterial 40 aus. Nun wurde in den zweiten Kanalabschnitt 30 Wasser eingeleitet. Im Kanalabschnitt 30 herrschte dabei ein ständiger Flussdruck von 150 mbar. Nach 30 s wurde der Bypass 30b des zweiten Kanalabschnitts geschlossen. Figur 4 (B) stellt die mikrofluidische Vorrichtung 100 nach 20 min dar. Im kammerförmigen Teil der Befüllungsstruktur 11 ist deutlich zu erkennen, dass ein Teil des Phasenwechselmaterial 40 bereits aufgelöst ist und der Bereich 41 des kammerförmigen Teils der Befüllungsstruktur 11 bereits mit Wasser aus dem zweiten Kanalabschnitt 30 gefüllt ist. Figur 4 (C) stellt die vollständige Öffnung, und damit Aktivierung, des mikrofluidischen Ventils nach 120 min dar. Das Phasenwechselmaterial 40 im kammerförmigen Teil der Befüllungsstruktur 11 war vollständig gelöst und mit dem Wasser, welches vom zweiten Kanalabschnitt 30 in den ersten Kanalabschnitt 20 strömte, wegtransportiert worden. Die Aktivierungszeit des mikrofluidischen Ventils betrug 120 min.

**Ausführungsbeispiel 2 - Aktivierungszeit**

In diesem Ausführungsbeispiel wurde eine mikrofluidische Vorrichtung wie in den Figuren 5 (A) und (B) dargestellt verwendet. In drei Experimenten wurden jeweils Befüllungsstrukturen mit verschiedenen Breiten des kanalförmigen Teils 14 verwendet. Als Phasenwechselmaterial wurde eine PEG-Paste wie im Ausführungsbeispiel 1 verwendet. Durch den Kanalabschnitt 30 wurde, wie in Ausführungsbeispiel 1, Wasser als Prozessmedium geleitet. Die folgende Tabelle fasst die experimentellen Parameter zusammen:

| Parameter | 1 | 2 | 3 |
|---|---|---|---|
| Kanalbreite a | 0,15 mm | 0,25 mm | 0,3 mm |
| Kanaltiefe | 0,17 mm | 0,17 mm | 0,17 mm |
| Flussdruck des Wassers im zweiten Kanalabschnitt 30 | 150 mbar | 150 mbar | 150 mbar |
| Aktivierungszeit | 15 min | 34 min | 42 min |

Deutlich zu erkennen ist, dass die Aktivierungszeit durch die Kanalbreite beeinflusst werden kann.

**Ausführungsbeispiel 3 - 3D-Aufbau Ventil**

Es wurde eine mikrofluidische Vorrichtung wie in Figuren 8 dargestellt als mikrofluidisches Ventil verwendet. Der kammerförmige Teil 22 des ersten Kanalabschnitts 20 wies einen Durchmesser von 2 mm und eine Dicke von 0,25 mm auf. Der kammerförmige Teil 11 der Befüllungsstruktur wies einen Durchmesser von 2 mm und eine Dicke von 0,25 mm auf. Der kammerförmige Teil 14 der Befüllungsstruktur wies 7 plötzliche Ausdehnungen 12, 13 je Verbindungselement jeweils zum ersten Kanalabschnitt 20 und zum zweiten Kanalabschnitt 30 auf. Eine plötzliche Ausdehnung hatte einen Durchmesser von 0,15 mm und eine Tiefe von 0,1 mm.

Der gesamte kammerförmige Teil 11 der Befüllungsstruktur und die plötzlichen Ausdehnungen 12, 13 der Verbindungselemente waren mit dem Phasenwechselmaterial 40 gefüllt. Als Phasenwechselmaterial 40 wurde eine PEG-Paste genutzt. Diese wies eine Zusammensetzung von PEG1000 (mittleres Molekulargewicht ~ 1000 g/mol) und PEG1500 (mittleres Molekulargewicht ~ 1500 g/mol) im Verhältnis 2:10 auf. Das Phasenwechselmaterial 40 wurde bei einer Temperatur von 50 °C aufgeschmolzen. Durch das Abkühlen der mikrofluidischen Vorrichtung bei Raumtemperatur härtete das Phasenwechselmaterial 40 aus. Nun wurde in den ersten Kanalabschnitt 20 Wasser als Prozessmedium eingeleitet. Im ersten Kanalabschnitt 20 herrschte dabei ein ständiger Flussdruck von 50 mbar. Der erste Kanalabschnitt 20 wies einen Bypass 20a auf, der nach 60 s geschlossen wurde.

Es wurden vier der beschriebenen mikrofluidischen Vorrichtungen hergestellt und jeweils die Aktivierungszeit gemessen. Es ergab sich eine mittlere Aktivierungszeit von $6 \pm 0,71$ min.

**Ausführungsbeispiel 4 - 3D-Aufbau Mischer**

Es wurde eine mikrofluidische Vorrichtung wie in Figur 10 dargestellt als mikrofluidischer Mischer verwendet. Der kammerförmige Teil 22 des ersten Kanalabschnitts 20 wies einen Durchmesser von 2 mm und eine Dicke von 0,25 mm auf. Der kammerförmige Teil 11 der Befüllungsstruktur wies einen Durchmesser von 2 mm und eine Dicke von 0,25 mm auf. Der kammerförmige Teil 14 der Befüllungsstruktur wies 20 plötzliche Ausdehnungen 12, 13 je Verbindungselement zum ersten Kanalabschnitt 20 und zum zweiten Kanalabschnitt 30 auf. Eine Ausdehnung hatte einen Durchmesser von 0,15 mm und eine Tiefe von 0,1 mm.

Der gesamte kammerförmige Teil 11 der Befüllungsstruktur war mit dem Phasenwechselmaterial 40 gefüllt. Als Phasenwechselmaterial 40 wurde eine PEG-Paste genutzt. Diese wies eine Zusammensetzung von PEG1000 (mittleres Molekulargewicht ~ 1000 g/mol) und PEG1500 (mittleres Molekulargewicht ~ 1500 g/mol) im Verhältnis 2:10 auf. Das Phasenwechselmaterial 40 wurde bei einer Temperatur von 50 °C aufgeschmolzen. Durch das Abkühlen der mikrofluidischen Vorrichtung 100 bei Raumtemperatur härtete das Phasenwechselmaterial 40 aus. Nun wurde in den ersten Kanalabschnitt 20 und den zweiten Kanalabschnitt 30 eingefärbtes Wasser als Prozessmedium eingeleitet. Der Flussdruck in beiden Kanalabschnitten betrug 0 mbar. Die Bypässe 20a, 30a beider Kanalabschnitte wurden nach 30s geschlossen.

Es wurden drei der beschriebenen mikrofluidischen Vorrichtungen 100 hergestellt und jeweils deren Aktivierungszeit gemessen. Es ergab sich eine mittlere Aktivierungszeit von 2 ± 0,25 min.

**Ausführungsbeispiel 5 - mikrofluidisches Ventil**

Es wurde eine mikrofluidische Vorrichtung 100 wie in Figuren 11 und 12 dargestellt als mikrofluidisches Ventil verwendet.

Der gesamte kammerförmige Teil 11 der Befüllungsstruktur war mit dem Phasenwechselmaterial 40 gefüllt. Als Phasenwechselmaterial 40 wurde eine PEG-Paste genutzt. Diese wies eine Zusammensetzung von PEG1000 (mittleres Molekulargewicht ~ 1000 g/mol) und PEG1500 (mittleres Molekulargewicht ~ 1500 g/mol) im Verhältnis 2:10 auf. Das Phasenwechselmaterial 40 wurde bei einer Temperatur von 50 °C aufgeschmolzen. Durch das Abkühlen der mikrofluidischen Vorrichtung 100 bei Raumtemperatur härtete das Phasenwechselmaterial 40 aus. Nun wurde in den ersten Kanalabschnitt 20 Wasser als Prozessmedium eingeleitet. Der Flussdruck im ersten Kanalabschnitt betrug konstant 50 mbar. Der Bypass 20a des ersten Kanalabschnitts 20 wurden nach 30s geschlossen.

Figur 13(B) stellt die mikrofluidische Vorrichtung 100 nach 15 min dar. Im kammerförmigen Teil der Befüllungsstruktur 11 war zu erkennen, dass ein Teil des Phasenwechselmaterial 40 bereits aufgelöst war und der Bereich 41 des kammerförmigen Teils der Befüllungsstruktur bereits mit Wasser aus dem ersten Kanalabschnitt 20 gefüllt war. Figur 13 (C) stellt die mikrofluidische Vorrichtung 100 nach 30 min dar. Es ist zu erkennen, dass ein größerer Anteil des Phasenwechselmaterials 40 aufgelöst wurde. Nach 36 min (Figur 13 (D)) war das mikrofluidische Ventil vollständig geöffnet, also aktiviert. Das Phasenwechselmaterial 40 im kammerförmigen Teil der Befüllungsstruktur 11 war insoweit gelöst das Wasser vom ersten Kanalabschnitt 20 durch das erste Verbindungselement der Befüllungsstruktur, den kammerförmigen Teil der Befüllungsstruktur 11 und das zweite Verbindungselement der Befüllungsstruktur in den zweiten Kanalabschnitt 30 transportiert wurde.

Es wurden vier der beschriebenen mikrofluidischen Vorrichtungen hergestellt und jeweils deren Aktivierungszeit gemessen. Es ergab sich eine mittlere Aktivierungszeit von 36 ± 3,6 min.

**Referenzen**

[1] Hansen et al., "Systematic investigation of protein phase behavior with microfluidic formulator" PNAS, Vol.101 (40) 14431-14436 (2004), https://doi.org/10.1073/pnas.0405847101

[2] Wang et al., "An EWOD-based micro diluter with high flexibility on dilution ratio", Microsystem Technologies 23, 3645-3651 (2017), DOI 10.1007/s00542-016-3146-2

[3] Ainla et al., "A Microfluidic Diluter Based on Pulse Width Flow Modulation" Anal. Chem. 81, 13, 5549-5556 (2009), https://doi.org/10.1021/ac9010028

[4] Fan et al. "Reconfigurable microfluidic dilution for high-throughput quantitative assays", Lab on a Chip 15, 2670-2679 (2015), DOI https://doi.org/10.1039/C5LC00432B

[5] White et al., "High-throughput microfluidic single-cell RT-qPCR", PNAS 108 (34), 13999-14004 (2011), https://doi.org/10.1073/pnas.1019446108

[6] Greiner et al., "Fluidic microchemomechanical integrated circuits processing chemical information", Lab on a Chip 12, 5034-5044 (2012), DOI https://doi.org/10.1039/C2LC40617A

**EP 4 450 161 A1**

[7] Ducrée et al., "The centrifugal microfluidic Bio-Disc platform", Journal of Micromechanics and Microengineering 17, S103 (2007), DOI 10.1088/0960-1317/17/7/S07

[8] Ward et al., "Mixing in microfluidic devices and enhancement methods", Journal of Micromechanics and Microengineering 25, 094001 (2015), DOI 10.1088/0960-1317/25/9/094001

[9] Capretto et al., "Micromixing within Microfluidic Devices", Microfluidics, Springer Verlag, Seiten 27-68 (2011), DOI: 10.1007/128_2011_150

[10] Man et al., "Microfabricated capillarity-driven stop valve and sample injector", Proceedings MEMS 98. IEE. Eleventh Annual International Workshop on Micro Electro Mechanical Systems, (1998), DOI: 10.1109/MEMSYS.1998.659727

[11] Papadimitriou et al. "3D capillary stop valves for versatile patterning inside microfluidic chips", Analytica Chimica Acta 1000, 232-238 (2018)

**Bezugszeichenliste**

| 10 | Befüllungsstruktur |
|---|---|
| 10a | Zulauf |
| 11 | kammerförmiger Teil der Befüllungsstruktur |
| 12, 13 | Ausdehnung |
| 14 | kanalförmiger Teil der Befüllungsstruktur |
| 15 | Einlass |
| 16 | Auslass |
| 20 | erster Kanalabschnitt |
| 20a | Bypass |
| 21 | Auslass |
| 22 | kammerförmiger Teil |
| 30 | zweiter Kanalabschnitt |
| 30a | Einlass |
| 30b | Bypass |
| 31 | kammerförmiger Teil |
| 40 | Phasenwechselmaterial |
| 41 | Bereich in dem Phasenwechselmaterial bereits gelöst ist |
| 50 | Strukturträger |
| 60 | Strukturträger |
| 60a | Perforation |
| 60b | Perforation |
| 70 | Strukturträger |
| 80 | Strukturträger |
| 90 | Strukturträger |
| 110 | Verschlusslayer |
| 120 | Verschlusslayer |
| 100 | mikrofluidische Vorrichtung |
| A-I | Ventile und Mischer |

**Patentansprüche**

**1.** Mikrofluidische Vorrichtung (100) aufweisend

• mindestens eine Befüllungsstruktur (10) aufweisend mindestens einen kanalförmigen Teil (14), mindestens ein Paar von Verbindungselementen und ein Phasenwechselmaterial (40), und
• mindestens einen ersten Kanalabschnitt (20) und einen zweiten Kanalabschnitt (30)

wobei

jedes Verbindungselement des Paares von Verbindungselementen mindestens eine plötzliche Ausdehnung (12, 13) aufweist;

das mindestens eine Paar von Verbindungselementen der Befüllungsstruktur (10) einen geöffneten und einen geschlossenen Zustand einnehmen kann wobei im geschlossenen Zustand der kanalförmige Teil (14) und sämtliche Verbindungselemente mit Phasenwechselmaterial gefüllt sind;

die mindestens eine Befüllungsstruktur (10) in der mikrofluidischen Vorrichtung (100) derart angeordnet ist, dass diese den ersten Kanalabschnitt (20) und den zweiten Kanalabschnitt (30) über das mindestens eine Paar von Verbindungselementen miteinander fluidverbindet, wenn sich das mindestens eine Paar von Verbindungselementen im geöffneten Zustand befindet; und

die Außenwand jeder plötzlichen Ausdehnung (12, 13) zur angrenzenden Außenwand eines Kanalabschnittes (20, 30) einen Öffnungswinkel $\alpha$ bildet, wobei $\alpha \leq 90°$ ist.

2. Mikrofluidische Vorrichtung (100) gemäß Anspruch 1, **dadurch gekennzeichnet, dass** das Phasenwechselmaterial einen Phasenwechsel von fest zu flüssig und umgekehrt aufweist.

3. Mikrofluidische Vorrichtung (100) gemäß Anspruch 2, **dadurch gekennzeichnet, dass** das Phasenwechselmaterial (40) ausgewählt ist aus der Gruppe aufweisend unvernetzte Polymere, Mischungen unvernetzter Polymere, vernetzte Polymere, Mischungen vernetzter Polymere, Salze, Mischungen von Salzen, organische Substanzen, Mischungen organischer Substanzen und Mischungen dieser.

4. Mikrofluidische Vorrichtung (100) gemäß Anspruch 2 **dadurch gekennzeichnet, dass** das Phasenwechselmaterial (40) ein unvernetztes und/oder vernetztes Polymer aufweist, ausgewählt aus der Gruppe aufweisend Polyacrylamide, Polyvinylalkohole, Polyacrylate, Hydroxycellulose, Polyvinylpyrridine oder Polyglykole (z.B. Polyethylenglykol, Polypropylenglykol) und deren Derivate.

5. Mikrofluidische Vorrichtung (100) gemäß Anspruch 2 **dadurch gekennzeichnet, dass** das Phasenwechselmaterial (40) ein Saccharid ist oder ein Saccharid aufweist.

6. Mikrofluidische Vorrichtung (100) gemäß einem der vorangegangenen Ansprüche, **dadurch gekennzeichnet, dass** das Phasenwechselmaterial (40) löslich ist, enzymatisch abbaubar ist, durch die Einwirkung von elektromagnetischer Strahlung abbaubar ist oder sich durch Wärmeeinwirkung verflüssigt.

7. Mikrofluidische Vorrichtung (100) gemäß einem der vorangegangenen Ansprüche, **dadurch gekennzeichnet, dass** die mikrofluidische Vorrichtung (100) mindestens ein Ventil und/oder mindestens ein Mischer (A-I) ist.

8. Mikrofluidische Vorrichtung (100) gemäß einem der vorangegangenen Ansprüche, **dadurch gekennzeichnet, dass** die Befüllungsstruktur (10), der erste Kanalabschnitt (20), der zweite Kanalabschnitt (30) und jeder weitere Kanalabschnitt in mindestens einem Strukturträger (50, 60, 70, 80) angeordnet sind.

9. Verfahren zum Aktivieren der mikrofluidischen Vorrichtung (100) gemäß einem der Ansprüche 1 bis 8, **dadurch gekennzeichnet, dass**

• die mindestens eine Befüllungsstruktur (10) und jede weitere mit einem Phasenwechselmaterial (40) im flüssigen Zustand gefüllt wird;
• das Phasenwechselmaterial (40) in den festen Zustand überführt wird;
• ein erstes Prozessmedium durch den ersten Kanalabschnitt (20) geleitet wird;
• optional ein zweites Prozessmedium durch den zweiten Kanalabschnitt (30) geleitet wird;
• das erste Prozessmedium und optional das zweite Prozessmedium Kontakt mit dem festen Phasenwechselmaterial (40) in der Befüllungsstruktur (10) haben und das feste Phasenwechselmaterial (40) in der Befüllungsstruktur (10) durch den Kontakt mit dem ersten Prozessmedium und/oder durch den Kontakt mit dem zweiten Prozessmedium gelöst wird und/oder durch das Einwirken eines Enzyms in dem ersten und/oder zweiten Prozessmedium abgebaut wird und/oder ein externer Einfluss zugeschaltet wird, durch den das Phasenwechselmaterial (40) abgebaut wird oder in die flüssige Phase übergeht;
• das erste Prozessmedium aus dem ersten Kanalabschnitt (20) über die Befüllungsstruktur (10) in den zweiten Kanalabschnitt (30) eindringt und optional das zweite Prozessmedium aus dem zweiten Kanalabschnitt (30) in den ersten Kanalabschnitt (20) eindringt.

10. Verfahren nach Anspruch 9, **dadurch gekennzeichnet, dass** die Aktivierungszeit der mikrofluidischen Vorrichtung (100)

- von der Geometrie der Befüllungsstruktur (10);
- der Art des Phasenwechselmaterials (40);
- der Art des Prozessmediums im ersten und/oder zweiten Kanalsystem (20, 30) und/oder jedem weiteren Kanalsystem, sowie deren Fließdruck;
- der Art des verwendeten Enzyms und dessen Konzentration; und/oder
- den Eigenschaften des externen Einflusses

beeinflusst wird, wobei die Aktivierungszeit zu Beginn des Schrittes e) beginnt und endet, wenn eine fluidische Verbindung zwischen dem ersten und zweiten Kanalabschnitt (20, 30) besteht.

**11.** Verfahren nach Anspruch 9 oder 10, **dadurch gekennzeichnet, dass** der externe Einfluss elektromagnetische Strahlung oder Wärme ist.

FIG 1A

FIG 1B

FIG 1C

EP 4 450 161 A1

# FIG 2A

100

20

12

11

14

10a

13

30

# FIG 2B

a

b

α

d

e

12

20

11

EP 4 450 161 A1

# FIG 3

100

21

15

20

12

14

11

13

30a

30b

# FIG 4A

0 min

# FIG 4B

20 min

# FIG 4C

120 min

EP 4 450 161 A1

# FIG 5A

# FIG 5B

EP 4 450 161 A1

FIG 6A  FIG 6B  FIG 6C  FIG 6D

0 min  8 min  12 min  15 min

EP 4 450 161 A1

FIG 7

FIG 9

FIG 8

# FIG 10

EP 4 450 161 A1

## FIG 11A

## FIG 11B

# FIG 12A

# FIG 12B

FIG 12C

FIG 12D

EP 4 450 161 A1

FIG 13A  FIG 13B  FIG 13C  FIG 13D

0 min     15 min     30 min     36 min

FIG 14A

20a

20

30b

13

11

30a

14

15

FIG 14B

30a

13

30b

20

14

11

20a

FIG 14C

FIG 14D

FIG 14E

# FIG 15

FIG 16A

100

30"

16

14

30'

20"

30

20'

20

15

FIG 16B

100

20

20'

20"

30

30'

30"

15    14

16

FIG 17A

FIG 17B

FIG 17C

EP 4 450 161 A1

Europäisches Patentamt
European Patent Office
Office européen des brevets

# EUROPÄISCHER RECHERCHENBERICHT

**Nummer der Anmeldung**

EP 24 17 1010

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2014/329301 A1 (HANDIQUE KALYAN [US]) 6. November 2014 (2014-11-06) | 1-3,6-11 | INV. B01L3/00 |
| Y | * Absatz [0045] * <br> * Absatz [0081] - Absatz [0091]; Abbildungen 3 - 5 * | 4,5 | |
| Y | US 2015/044688 A1 (RICHTER ANDREAS [DE] ET AL) 12. Februar 2015 (2015-02-12) * Absatz [0032] - Absatz [0033] * | 4,5 | |
| A | CN 101 968 131 A (SHANGHAI INST MICROSYS & INF) 9. Februar 2011 (2011-02-09) * das ganze Dokument * | 1-11 | |
| A | US 2004/089616 A1 (KELLOGG GREGORY [US] ET AL) 13. Mai 2004 (2004-05-13) * das ganze Dokument * | 1-11 | |

**RECHERCHIERTE SACHGEBIETE (IPC)**

B01L
F16K

Der vorliegende Recherchenbericht wurde für alle Patentansprüche erstellt

| Recherchenort | Abschlußdatum der Recherche | Prüfer |
|---|---|---|
| Den Haag | 6. September 2024 | Ueberfeld, Jörn |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 24 17 1010

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-09-2024

| Im Recherchenbericht angeführtes Patentdokument | Datum der Veröffentlichung | Mitglied(er) der Patentfamilie | Datum der Veröffentlichung |
|---|---|---|---|
| US 2014329301 A1 | 06-11-2014 | CN 104040238 A | 10-09-2014 |
| | | EP 2773892 A1 | 10-09-2014 |
| | | US 2014329301 A1 | 06-11-2014 |
| | | US 2023023741 A1 | 26-01-2023 |
| | | WO 2013067202 A1 | 10-05-2013 |
| US 2015044688 A1 | 12-02-2015 | DE 102012206042 A1 | 31-10-2013 |
| | | EP 2836302 A1 | 18-02-2015 |
| | | US 2015044688 A1 | 12-02-2015 |
| | | WO 2013153181 A1 | 17-10-2013 |
| CN 101968131 A | 09-02-2011 | KEINE | |
| US 2004089616 A1 | 13-05-2004 | US 6632399 B1 | 14-10-2003 |
| | | US 2004089616 A1 | 13-05-2004 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- US 6536476 B
- US 6283718 B
- EP 2969215 A
- WO 2014198939 A1
- EP 2836302 A
- US 7722809 B

**In der Beschreibung aufgeführte Nicht-Patentliteratur**

- **R. PAL et al.** *Anal. Chem.,* 2004, vol. 76 (13
- **KONG et al.** *Microfluidics and Nanofluidics,* 2015, vol. 18
- **GREINER et al.** *Lab on a Chip,* 2012, vol. 12
- **HANSEN et al.** Systematic investigation of protein phase behavior with microfluidic formulator. *PNAS,* 2004, vol. 101 (40), 14431-14436, https://doi.org/10.1073/pnas.0405847101
- **WANG et al.** An EWOD-based micro diluter with high flexibility on dilution ratio. *Microsystem Technologies,* 2017, vol. 23, 3645-3651
- **AINLA et al.** A Microfluidic Diluter Based on Pulse Width Flow Modulation. *Anal. Chem.,* 2009, vol. 81 (13), 5549-5556, https://doi.org/10.1021/ac9010028
- **FAN et al.** Reconfigurable microfluidic dilution for high-throughput quantitative assays. *Lab on a Chip,* 2015, vol. 15, 2670-2679, https://doi.org/10.1039/C5LC00432B
- **WHITE et al.** High-throughput microfluidic single-cell RT-qPCR. *PNAS,* 2011, vol. 108 (34), 13999-14004, https://doi.org/10.1073/pnas.1019446108
- **GREINER et al.** Fluidic microchemomechanical integrated circuits processing chemical information. *Lab on a Chip,* 2012, vol. 12, 5034-5044, https://doi.org/10.1039/C2LC40617A
- **DUCRÉE et al.** The centrifugal microfluidic Bio-Disc platform. *Journal of Micromechanics and Microengineering,* 2007, vol. 17, S103
- **WARD et al.** Mixing in microfluidic devices and enhancement methods. *Journal of Micromechanics and Microengineering,* 2015, vol. 25, 094001
- Micromixing within Microfluidic Devices. **CAPRETTO et al.** Microfluidics. Springer Verlag, 2011, 27-68
- **MAN et al.** Microfabricated capillarity-driven stop valve and sample injector. *Proceedings MEMS 98. IEE. Eleventh Annual International Workshop on Micro Electro Mechanical Systems,* 1998
- **PAPADIMITRIOU et al.** 3D capillary stop valves for versatile patterning inside microfluidic chips. *Analytica Chimica Acta,* 2018, vol. 1000, 232-238